(19) Europäisches Patentamt / European Patent Office / Office européen des brevets

(11) **EP 4 718 526 A1**

(12) **EUROPEAN PATENT APPLICATION**
published in accordance with Art. 153(4) EPC

(43) Date of publication:
01.04.2026 Bulletin 2026/14

(21) Application number: 24811309.4

(22) Date of filing: 08.05.2024

(51) International Patent Classification (IPC):
$H01M\ 4/36^{(2006.01)}$    $H01M\ 4/525^{(2010.01)}$
$H01M\ 4/505^{(2010.01)}$    $H01M\ 4/131^{(2010.01)}$
$H01M\ 4/62^{(2006.01)}$    $H01M\ 10/052^{(2010.01)}$
$H01M\ 4/38^{(2006.01)}$    $H01M\ 4/134^{(2010.01)}$
$H01M\ 4/02^{(2006.01)}$

(52) Cooperative Patent Classification (CPC):
Y02E 60/10

(86) International application number:
PCT/KR2024/006135

(87) International publication number:
WO 2024/242370 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.05.2023 KR 20230066282

(71) Applicant: SK On Co., Ltd.
Seoul 03161 (KR)

(72) Inventors:
• JANG, Hwan Ho
  Daejeon 34124 (KR)
• KWON, Seong Cho
  Daejeon 34124 (KR)
• KIM, Moon Sung
  Daejeon 34124 (KR)
• KIM, Hyo Mi
  Daejeon 34124 (KR)
• RYU, Sang Baek
  Daejeon 34124 (KR)
• PARK, Da Hye
  Daejeon 34124 (KR)
• PARK, Sang Won
  Daejeon 34124 (KR)
• BANG, Sang In
  Daejeon 34124 (KR)
• YOOK, Seung Hyun
  Daejeon 34124 (KR)
• CHUNG, Da Bin
  Daejeon 34124 (KR)
• HAN, Jun Hee
  Daejeon 34124 (KR)

(74) Representative: Stolmár & Partner
Patentanwälte PartG mbB
Blumenstraße 17
80331 München (DE)

(54) **LITHIUM SECONDARY BATTERY**

(57) A lithium secondary battery according to embodiments of the present disclosure comprises: a positive electrode containing a first positive electrode active material; and a negative electrode containing a silicon-based active material, wherein the first positive electrode active material comprises: lithium-nickel metal oxide particles; and a coating layer disposed on the surface of the lithium-nickel metal oxide particles and including at least one selected from the group consisting of a lithium-phosphorus-containing compound, a lithium-sulfur-containing compound, a lithium-tungsten-containing compound, and a lithium-aluminum-containing compound. The lithium secondary battery of the present disclosure can achieve improvements in high-temperature lifespan characteristics and rapid charge/discharge lifespan characteristics and a reduction in the amount of gas generated.

EP 4 718 526 A1

[FIG. 11]

## High-Temperature Cycle Life Evaluation

## Description

[Technical Field]

The present disclosure provides a lithium secondary battery. More specifically, the present disclosure relates to a lithium secondary battery including a cathode and an anode.

[Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery is actively developed and applied due to its high operating voltage, high energy density per unit weight, and advantages in charging speed and weight reduction.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

A lithium-nickel metal oxide may be used as an active material for the cathode of a lithium secondary battery. Examples of the lithium-nickel metal oxide may include a nickel-based lithium metal oxide. The nickel-based lithium metal oxide may include a high nickel content, thereby increasing the capacity of the battery.

However, the nickel-based lithium metal oxide has a problem in that, when the nickel content increases, the structural stability of the electrode is poor during repeated charging and discharging of the battery, resulting in a decrease in the cycle life properties of the battery.

[Summary of Invention]

[Problems to be Solved by Invention]

An object of the present disclosure is to provide a lithium secondary battery with improved cycle life properties.

[Means for Solving Problems]

According to example embodiments, there is provided a lithium secondary battery including: a cathode including a cathode current collector, and a cathode active material layer disposed on the cathode current collector and including a first cathode active material; and an anode including an anode current collector, and an anode active material layer disposed on the anode current collector and including a silicon-based active material, wherein the first cathode active material includes lithium-nickel metal oxide particles, and a coating layer disposed on at least a portion of a surface of the lithium-nickel metal oxide particles and including at least one selected from the group consisting of a lithium-phosphorus-containing compound, a lithium-sulfur-containing compound, a lithium-tungsten-containing compound, and a lithium-aluminum-containing compound.

In example embodiments, , the content of the first cathode active material may be 50% by weight to 99% by weight based on the total weight of the cathode active material layer.

In example embodiments, the lithium-nickel metal oxide particles may have a secondary particle structure in which a plurality of primary particles are agglomerated, and the coating layer may be disposed on at least a portion of the surface of the secondary particles and at least a portion of interfaces between the plurality of primary particles within the secondary particles.

In example embodiments, the lithium-nickel metal oxide may further include at least one of cobalt and manganese, and the content of nickel in the lithium-nickel metal oxide may be 48 mol% to 98 mol%, based on the total molar amount of nickel, cobalt and manganese.

In example embodiments, the cathode active material layer may further include a second cathode active material including lithium-nickel metal oxide particles having a secondary particle structure in which a plurality of primary particles are agglomerated and not including the coating layer.

In example embodiments, the cathode active material layer may further include a third cathode active material including lithium-nickel metal oxide particles having a crystal grain size of 250 nm to 1000 nm, as measured by X-ray diffraction (XRD) analysis and calculated using Equation 1 below, and not including the coating layer:

[Equation 1]

$$L = \frac{0.9\lambda}{\beta \cos\theta}$$

(in Equation 1, L denotes the crystal grain size, λ denotes the X-ray wavelength, β denotes the full width at half maximum of the peak of the (003) plane, and θ denotes the diffraction angle).

In example embodiments, the cathode active material layer may include a first cathode active material layer and a second cathode active material layer sequentially stacked on the cathode current collector, wherein the first cathode active material layer and the second cathode active material layer may each independently include at least one selected from the group consisting of the first cathode active material, the second cathode active material, and the third cathode active material. The second cathode active material may include lithium-nickel metal oxide particles having a secondary particle structure in which a plurality of primary particles are agglomerated and not including the coating layer, the third cathode active material includes lithium-nickel metal oxide particles having a crystal grain size of 250 nm to 1000 nm, as measured by X-ray diffraction (XRD) analysis and calculated using Equation 1 below, and not including the coating layer. At least one of the types and contents of the cathode active materials included in the first cathode active material layer and the second cathode active material layer may be different:

[Equation 1]

$$L = \frac{0.9\lambda}{\beta \cos\theta}$$

(in Equation 1, L denotes the crystal grain size, λ denotes the X-ray wavelength, β denotes the full width at half maximum of the peak of the (003) plane, and θ denotes the diffraction angle).

In example embodiments, the cathode active material layer may include a first cathode active material layer and a second cathode active material layer sequentially stacked on the cathode current collector, wherein the first cathode active material layer and the second cathode active material layer may each include a binder, and the content of the binder in the total weight of the first cathode active material layer may be greater than or equal to the content of the binder in the total weight of the second cathode active material layer.

In example embodiments, the content of the second cathode active material may be 10% by weight to 50% by weight based on the total weight of the cathode active material layer.

In example embodiments, the content of the third cathode active material may be 10% by weight to 50% by weight based on the total weight of the cathode active material layer.

In example embodiments, a region may exist within 10 nm to 30 nm in depth from the surface of the primary particles of the second cathode active material, in which the content of the layered structure is less than the sum of the contents of the cubic structure and the spinel structure.

In example embodiments, the silicon-based active material may include at least one selected from the group consisting of silicon, a silicon alloy, silicon oxide, metal-doped silicon oxide, silicon carbide, a silicon-carbon composite (Si-C), and silicon-containing core-shell structured particles.

In example embodiments, the content of the silicon-based active material may be 5% by weight to 30% by weight based on the total weight of the anode active material layer.

In example embodiments, the anode active material may further include artificial graphite.

In example embodiments, the anode active material layer may include a first anode active material layer and a second anode active material layer sequentially stacked on the anode current collector, wherein the first anode active material layer and the second anode active material layer may each include a binder, and the content of the binder in the total weight of the first anode active material layer may be greater than or equal to the content of the binder in the total weight of the second anode active material layer.

In example embodiments, the anode may further include a primer layer disposed between the anode active material layer and the anode current collector and including a binder.

[Effects of the Invention]

The lithium secondary battery according to example embodiments of the present disclosure may include lithium-nickel metal oxide particles including a coating layer containing at least one of a lithium-phosphorus-containing compound, a lithium-sulfur-containing compound, a lithium-tungsten-containing compound, and a lithium-aluminum-containing compound. Accordingly, electrode stability may be maintained and capacity retention may be improved even during repeated charging and discharging of the battery at high temperatures. The lithium secondary battery may include a silicon-based active material, thereby further improving fast charging and discharging performance and capacity properties.

According to some embodiments, the lithium secondary battery may include a first cathode active material and a second cathode active material that does not include the coating layer. Accordingly, the battery capacity may be sufficiently secured while improving roomtemperature cycle life-span or rapid cycle life-span properties.

According to some embodiments, the cathode or anode may include a multi-layered active material layer. The active material layer adjacent to the current collector may include a higher content of the binder, thereby improving the adhesion and mechanical stability of the active material layer.

[Brief Description of Drawings]

FIG. 1 is a schematic plan view illustrating a lithium secondary battery according to example embodiments.

FIG. 2 is a schematic cross-sectional view illustrating the lithium secondary battery according to example embodiments.

FIGS. 3A to 3C are TEM-SAED images of primary particles of the second cathode active material prepared in Synthesis Example 2-1.

FIGS. 4A and 4B are TEM images of the first cathode active material prepared in Synthesis Example 1-1.

FIG. 5A is a particle cross-sectional SEM image of the first cathode active material prepared in Synthesis Example 1-3; and FIGS. 5B and 5C are EDS elemental mapping images of sulfur and tungsten elements, respectively, for the image in FIG. 5A.

FIGS. 6A to 6D are SSRM diffusion resistance distribution images of electrodes including the cathode active materials of Synthesis Examples 1-3 and 1-1;

FIG. 7 is a graph showing the discharge capacity retention during high-temperature charge and discharge as a function of the number of cycles for the batteries of Examples 1 to 3.

FIG. 8 is a graph showing the discharge capacity retention during high-temperature charge and discharge as a function of the number of cycles for the batteries of Examples 1, 4, 5 and 11.

FIG. 9 is a graph showing the discharge capacity retention during high-temperature charge and discharge as a function of the number of cycles for the batteries of Examples 1 and 6 to 8.

FIG. 10 is a graph showing the discharge capacity retention during high-temperature charge and discharge as a function of the number of cycles for the batteries of Examples 1, 9 and 10.

FIG. 11 is a graph showing the discharge capacity retention during high-temperature charge and discharge as a function of the number of cycles for the batteries of Example 1 and Comparative Examples 1 to 3.

FIG. 12 is a graph showing the discharge capacity retention during fast charge and discharge as a function of the number of cycles for the batteries of Examples 1 to 3.

FIG. 13 is a graph showing the discharge capacity retention during fast charge and discharge as a function of the number of cycles for the batteries of Examples 1, 4, 5 and 11.

FIG. 14 is a graph showing the discharge capacity retention during fast charge and discharge as a function of the number of cycles for the batteries of Examples 1 and 6 to 8.

FIG. 15 is a graph showing the discharge capacity retention during fast charge and discharge as a function of the number of cycles for the batteries of Example 1 and Examples 9 and 10.

FIG. 16 is a graph showing the discharge capacity retention during fast charge and discharge as a function of the number of cycles for the batteries of Example 1 and Comparative Examples 1 to 3.

[Preferred Implementation for Practicing the Invention]

According to embodiments, a high-capacity lithium secondary battery with improved fast charging properties is provided.

Hereinafter, embodiments of the present disclosure will be described in more detail with reference to the accompanying drawings. However, the drawings attached to this specification illustrate embodiments of the present disclosure and serve to further enhance the understanding of the technical spirit of the present disclosure together with the above-described invention. Therefore, the present disclosure should not be construed as being limited to the matters illustrated in the drawings.

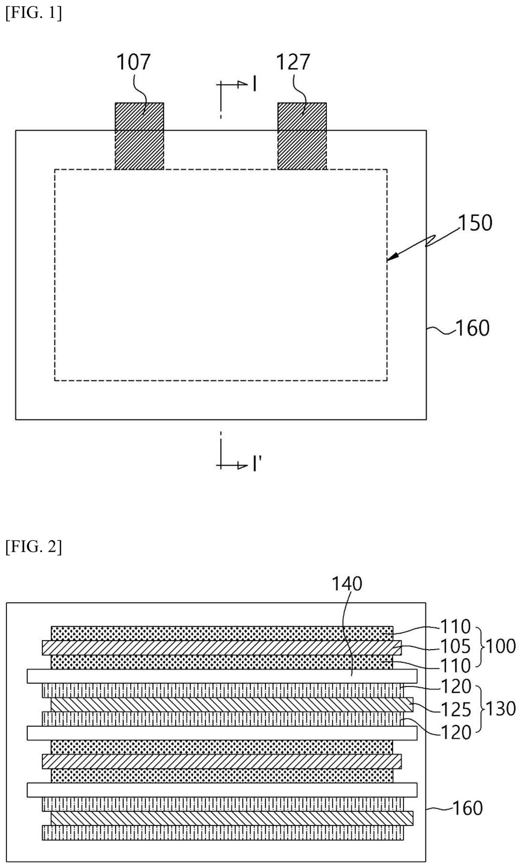

FIG. 1 is a schematic plan view of a lithium secondary battery according to an example embodiments, and FIG. 2 is a cross-sectional view of the lithium secondary battery according to example embodiments taken along line I-I' of FIG. 1.

Referring to FIGS. 1 and 2, the lithium secondary battery may include an anode 130, a cathode 100 disposed opposite to the anode 130, and an electrolyte (not shown).

In example embodiments, the cathode 100 may include a cathode active material layer 110 on at least one surface of a cathode current collector 105. The cathode active material layer 110 may include a cathode active material. For example, the cathode active material may include lithium metal oxide particles capable of reversible intercalation and deintercalation of lithium ions.

The cathode active material may include a first cathode active material. The first cathode active material may include lithium-nickel metal oxide particles.

In example embodiments, the lithium-nickel metal oxide may further include at least one of cobalt and manganese. In some embodiments, the lithium-nickel metal oxide may include lithium, nickel, cobalt and manganese.

The content of nickel in the lithium-nickel metal oxide may be 48 mol% to 98 mol%, based on the total molar amount of nickel, cobalt and manganese. When nickel is included within this range, a high-capacity secondary battery may be implemented.

In some embodiments, the lithium-nickel metal oxide may be represented by the following formula:

[Formula]     $Li_xNi_{(1-a)}M_aO_y$

In the above formula, M is at least one of Co, Al, Zr, Ti, Cr, B, Mg, Mn, Ba, Si, Y, W and Sr, and x, y and a may satisfy $0.9 \leq x \leq 1.2$, $1.9 \leq y \leq 2.1$, and $0.02 \leq a \leq 0.52$.

In some embodiments, the lithium-nickel metal oxide may include a doping metal. For example, the doping metal may include at least one of Al, Zr, Ti, Cr, B, Mg, Ba, Si, Y, W and Sr, and may be doped by substituting for lithium and/or nickel sites with the doping metal in the lithium-nickel metal oxide.

The first cathode active material may include a coating layer disposed on at least a portion of a surface of the particles and including at least one selected from the group consisting of a lithium-phosphorus-containing compound, a lithium-sulfur-containing compound, a lithium-tungsten-containing compound, and a lithium-aluminum-containing compound. In some embodiments, the coating layer may include at least one of a lithium-phosphorus-containing compound and a lithium-sulfur-containing compound, and at least one of a lithium-tungsten-containing compound and a lithium-aluminum-containing compound.

The coating layer may include a lithium-phosphorus-containing compound, a lithium-sulfur-containing compound, a lithium-tungsten-containing compound, and/or a lithium-aluminum-containing compound, which are formed during the process of removing the residual lithium of the first cathode active material. Accordingly, the amount of residual lithium within the first cathode active material may be reduced, and the capacity retention during high-temperature charging and discharging of the lithium secondary battery may be improved.

The lithium-phosphorus-containing compound may include a lithium phosphate compound, such as $Li_3PO_4$. The lithium-sulfur-containing compound may include a lithium sulfate compound, such as $Li_2SO_4$. The lithium-tungsten-containing compound may include a lithium tungstate compound, such as $Li_2WO_4$ and/or $Li_2W_2O_7$. The lithium-aluminum-containing compound may include $LiAlO_2$.

In example embodiments, the coating layer may include a lithium-tungsten-containing compound. A coating layer including the lithium-tungsten-containing compound may improve the durability of the first cathode active material and may form a lithium tungsten coating material with excellent conductivity through a reaction with LiOH on the surface of the active material, thereby further reducing the amount of residual LiOH. Consequently, significant capacity degradation may be prevented even when the lithium secondary battery is operated over a long period, and battery performance may be improved, particularly during high-temperature charge and discharge or during fast charge and discharge.

In example embodiments, the coating layer may be disposed on at least a portion of the surface of the lithium-nickel metal oxide. For example, the coating layer may be in the form in which microparticles including at least one selected from the group consisting of a lithium-phosphorus-containing compound, a lithium-sulfur-containing compound, a lithium-tungsten-containing compound, and a lithium-aluminum-containing compound are attached to the surface of the lithium-nickel metal oxide particles in an island-like form.

Alternatively, the coating layer may continuously cover at least a portion of the surface of the lithium-nickel metal oxide particles of the first cathode active material. In this case, the coating layer may include a lithium-tungsten-containing compound.

In some embodiments, the first cathode active material may include lithium-nickel metal oxide particles having a secondary particle structure in which a plurality of primary particles are agglomerated. The secondary particles may include a plurality of primary particles, and interfaces where the primary particles are in contact with each other may be present within the secondary particles.

In example embodiments, the coating layer may be disposed on at least a portion of the surfaces of the primary particles and may be present on at least a portion of the interfaces between the primary particles within the secondary particles. The coating layer may also be present on at least a portion of the outer surface of the secondary particles, which corresponds to the surfaces of the primary particles exposed to the outside of the secondary particles.

The content of the first cathode active material may be 50% by weight ("wt%") to 99 wt% based on the total weight of the cathode active material layer. In some embodiments, the content of the first cathode active material may be 60 wt% to 99 wt%, or 65 wt% to 99 wt% based on the total weight of the cathode active material layer.

Within the above range, the high-temperature properties of the lithium secondary battery may be improved. For example, cycle life properties may be improved in an environment at a temperature higher than room temperature, and even when stored at high temperatures for long periods of time, the amount of gas generated may be reduced, preventing battery performance degradation and damage.

In example embodiments, the first cathode active material may be prepared using the following method.

In example embodiments, lithium-nickel metal oxide particles may be prepared first. The lithium-nickel metal oxide particles may be in the form of secondary particles in which a plurality of primary particles are agglomerated. The lithium-nickel metal oxide particles may be prepared using any method known in the art. For example, lithium-nickel metal oxide particles may be prepared by reacting a transition metal precursor with a lithium source material. The transition metal precursor (e.g., a Ni-Co-Mn hydroxide precursor) may be prepared through a co-precipitation reaction.

For example, transition metal precursors may be prepared through the co-precipitation reaction of metal salts. These metal salts may include nickel salts, manganese salts, and cobalt salts.

Examples of nickel salts may include nickel sulfate, nickel hydroxide, nickel nitrate, nickel acetate, or a hydrate thereof, and the like. Examples of manganese salts may include manganese sulfate, manganese acetate, or a hydrate thereof, and the like.

Examples of cobalt salts may include cobalt sulfate, cobalt nitrate, cobalt carbonate, or a hydrate thereof, and the like.

The metal salts may be mixed with a precipitant and/or chelating agent in a ratio that satisfies the content or concentration ratio of each metal described with reference to Formula 1 to prepare an aqueous solution. The aqueous solution may be co-precipitated in a reactor to prepare a transition metal precursor.

The precipitant may include an alkaline compound, such as sodium hydroxide ($NaOH$), sodium carbonate ($Na_2CO_3$) or the like. The chelating agent may include, for example, ammonia water (e.g., $NH_3H_2O$), ammonium carbonate (e.g., $NH_3HCO_3$) or the like.

The temperature of the co-precipitation reaction may be adjusted, for example, in the range of about 40 °C to 60 °C. The reaction time may be adjusted in the range of about 24 to 72 hours.

The lithium raw material may include, for example, lithium-containing carbonates (e.g., lithium carbonate, and the like.), hydrates (e.g., lithium hydroxide monohydrate ($LiOH·H_2O$)), hydroxides (e.g., lithium hydroxide, and the like.), nitrates (e.g., lithium nitrate ($LiNO_3$)), chlorides (e.g., lithium chloride ($LiCl$)), and the like. These may be used alone or in combination of two or more thereof.

In example embodiments, the lithium-nickel metal oxide may be prepared by a method of preparing a mixture including a transition metal precursor and a lithium raw material and then performing a first calcination. The mixture may further include a raw material containing a doping metal element or an auxiliary metal element.

The raw material containing the doping metal element or auxiliary metal element may include at least one selected from the group consisting of $Al_2O_3$, $TiO_2$, $Ti_2O_3$, $ZrO_2$, $B_2O_3$, $SrO_2$, $SrAl_2O_4$, $SrTiO_3$, $SrWO_4$, $BaO$, $WO_3$, $(NH_4)0H_2(W_2O_7)_6$, $MgO$, $Ta_2O_5$, $Nb_2O_5$, $MoO_3$, $H_4[W1_2SiO_{40}]$, $H_4SiO_4·12MoO_3$ and $(NH_4)_2MoO_4$. In this case, the metal oxide may be sufficiently converted into a metal hydroxide, thereby enabling a secondary battery having excellent cycle life properties and low electrical resistance.

The first calcination may be performed at a temperature of about 600 °C to 1000 °C for about 5 to 15 hours in an oxygen atmosphere.

Next, a coating layer may be formed on the surface of the lithium-nickel metal oxide particles. In the process of forming the coating layer, residual lithium may be removed.

In example embodiments, a preliminary coating may be formed on the surface of the lithium-nickel metal oxide particles. The preliminary coating may be formed by dry mixing the lithium-nickel metal oxide particles with a metal-containing raw material (hereinafter also referred to as a "metal-containing precursor") for preliminary coating.

The metal-containing precursor for preliminary coating may include an oxide of the metal for preliminary coating. For example, the metal-containing precursor for preliminary coating may include aluminum oxide, tungsten oxide, or the like, and preferably tungsten oxide. In example embodiments, when the metal-containing precursor for preliminary coating includes tungsten oxide, excellent low electrical resistance may be achieved and fast charging cycle life may be improved.

The metal-containing precursor for preliminary coating may be used in an amount of 0.001 to 0.01 mol per 1 mol of the lithium-nickel metal oxide.

Next, the lithium-nickel metal oxide particles having the preliminary coating formed thereon may be treated with an aqueous solution to remove residual lithium. The aqueous solution may include a compound for removing residual lithium that can react with lithium compounds such as lithium carbonate remaining in the lithium-nickel metal oxide.

To improve the yield of the lithium-nickel metal oxide particles or ensure the stability of the synthesis process, an excess amount of a lithium precursor (lithium salt) may be used. In this case, the lithium precursor such as lithium hydroxide (LiOH) and/or lithium carbonate ($Li_2CO_3$) may remain on the surface of the lithium-nickel metal oxide particles.

In addition, as the nickel content of the lithium-nickel metal oxide increases, the first calcination may be performed at a lower temperature. In this case, the residual lithium content on the surface of the lithium-nickel metal oxide particles may increase.

The residual lithium may be removed by washing with water (washing treatment) using a volume substantially equal to that of the lithium-nickel metal oxide. However, in this case, the surface of the lithium-nickel metal oxide particles may be oxidized, and side reactions between the lithium-nickel metal oxide and water may occur, thereby causing damage or collapse of the layered structure of the particles.

Furthermore, when the layered structure is transformed by water into a face-centered cubic (FCC) structure, a spinel structure, and/or a rock salt structure instead of a hexagonal close-packed structure, the lithium-nickel metal oxide may be hydrolyzed, generating nickel impurities such as NiO or $Ni(OH)_2$. In this case, the transformed structures are irreversibly modified and may impede lithium migration during charging and discharging of the battery. Consequently, the initial capacity and capacity retention of the secondary battery may decrease.

In example embodiments, the aqueous solution treatment may enable passivation of the surface of the lithium-nickel metal oxide particles by a compound for removing residual lithium, thereby securing the initial capacity of the battery and preventing significant capacity degradation even during repeated charge and discharge cycles. In example embodiments, the aqueous solution may include an aqueous solvent and a compound for removing residual lithium. The aqueous solvent may include deionized water, and the compound for removing residual lithium may include a sulfur-containing compound, a phosphorus-containing compound or the like.

For example, the sulfur-containing compound may include a sulfonyl compound, and may include at least one selected from the group consisting of $(NH_4)_2SO_4$, $SO_3NH_3$, $NH_4SO_3NH_2$, $Al_2(SO_4)_3$, $AlK(SO_4)_2$, $AlNH_4(SO_4)_2$, $Ti(SO_4)_2$, $TiOSO_4$, $SrSO_4$, $KHSO_4$, $NaHSO_4$, and $KHSO_4$.

For example, the phosphorus-containing compound may include a phosphate compound, such as at least one selected from $NH_4H_2PO_4$, $(NH_4)_2HPO_4$, $(NH_4)_3PO_4$, $Mg_3(PO_4)_2$, $AlPO_4$, $Co_3(PO_4)_2$, $(C_2H_5O)_2P(O)H$, $(C_4H_9O)_2P(O)OH$, $Ni_3(PO_4)_2$, $NaNH_4HPO_4$, $(NH_4)MgPO_4(6H_2O)$, $Na_2H_2P_2O_7$, $Na_4P_2O_7$, and $(NaPO3)_n$ (n>0).

The content of the compound for removing residual lithium in the aqueous solution may be 5 to 30 parts by weight, or 10 to 15 parts by weight, based on 100 parts by weight of the aqueous solvent.

The lithium-nickel metal oxide particles having the dry coating formed thereon may be mixed with the aqueous solution to prepare a mixture. The mixture may contain 2 to 20 parts by weight of an aqueous solvent based on 100 parts by weight of the lithium-nickel metal oxide particles having the preliminary coating. In this case, sufficient lithium-sulfur compounds may be formed at locations where residual lithium is present on the surface and inside the lithium-nickel metal oxide particles, while preventing damage or collapse of the layered structure of the primary particles, as may occur with a water-washing process.

In some embodiments, the mixture may include 0.5 to 1.8 parts by weight of a compound for removing residual lithium based on 100 parts by weight of the lithium-nickel metal oxide particles having the preliminary coating formed thereon. This allows a sufficient amount of the compound for removing residual lithium to react with the residual lithium to form, for example, a lithium-sulfur compound, while preventing an excessively high sulfur content within the cathode active material. Consequently, the cycle life properties of the battery may be improved while maintaining output properties.

Subsequently, the mixture may be subjected to a second calcination process to prepare a first cathode active material. In the second calcination process, the metal included in the preliminary coating and the compound for removing residual lithium included in the aqueous solution may react with the residual lithium to form a coating layer on the surface of the lithium-nickel metal oxide particles. For example, when the mixture includes a sulfur-containing compound, the sulfur-containing compound may react with the residual lithium present on the surface of the lithium-nickel metal oxide particles and be converted into a lithium-sulfur compound. Accordingly, the residual lithium may be removed, thereby improving the cycle life properties of the secondary battery.

For example, when a sulfur-containing compound reacts with residual lithium and moisture, some of the metal oxides included in the preliminary coating may be converted into metal hydroxides with stronger binding energies. Accordingly, the high-temperature cycle life properties and stability of the secondary battery may be improved.

In some embodiments, when the compound for removing residual lithium includes a sulfur-containing compound, a portion of the sulfur-containing compound may react with residual lithium present on the surface of the lithium-nickel metal oxide particles to be converted into lithium-sulfur compounds, while the remainder may convert the metal oxides included in the preliminary coating into metal hydroxides. Consequently, a coating including the lithium-sulfur-containing compound and the metal hydroxides included in the preliminary coating may be formed on the surface of the lithium-nickel metal oxide particles.

Furthermore, since no water washing is required, for example, the lithium-nickel metal oxide particles may not include primary particles with a face-centered cubic structure, and residual lithium may be effectively removed while preventing oxidation and damage to the layered structure of the particle surface caused by water.

In example embodiments, the second calcination may be performed at a temperature of about 250 °C to 550 °C for about 5 to 15 hours. In this case, the metal oxide of the preliminary coating may be sufficiently converted into a metal hydroxide, while sufficiently removing residual lithium, thereby forming a coating.

In addition, performing the calcination within the above temperature range may prevent the metal hydroxide from being converted back into metal oxide at excessively high temperatures. Consequently, the cycle life and capacity properties of the battery may be improved.

In example embodiments, the cathode active material layer may further include a cathode active material different from the first cathode active material.

In example embodiments, the cathode active material layer may include lithium-nickel metal oxide particles having a secondary particle structure in which a plurality of primary particles are agglomerated, and a second cathode active material that does not include the coating layer. For example, the second cathode active material may be prepared by synthesizing the lithium-nickel metal oxide particles and then washing them with water.

The lithium-nickel metal oxide particles of the second cathode active material may have a secondary particle structure and may have a monocrystalline or polycrystalline particle structure.

In example embodiments, a region may exist within 10 nm to 30 nm in depth from the surface of the primary particles of the second cathode active material, in which the content of the layered structure is less than the sum of the contents of the cubic structure and the spinel structure. For example, when the crystal structure of the primary particles of the second cathode active material is analyzed by transmission electron microscopy (TEM) and selected area electron diffraction (SAED), a region may exist within 10 nm or 20 nm in depth from the surface of the primary particles, in which the content of the layered structure is less than the sum of the contents of the cubic structure and the spinel structure.

For example, within a region 3 nm, 4 nm, 5 nm, or 10 nm in depth from the surface of the primary particles of the second cathode active material, the content of the layered structure may be less than the sum of the contents of the cubic structure and the spinel structure.

In example embodiments, the cathode active material layer may include a third cathode active material that includes lithium-nickel metal oxide particles with a monocrystalline structure but does not include the coating layer. The third cathode active material may have relatively large crystal grains, and thus the number of crystal grains contained in each particle may be small.

The lithium-nickel metal oxide particles of the third cathode active material may have a crystal grain size of about 250 nm to 1,000 nm, which may be calculated using the Scherrer equation (Equation 1 below) based on the full width at half maximum (FWHM) obtained through XRD analysis.

$$[\text{Equation 1}]$$

$$L = \frac{0.9\lambda}{\beta \cos\theta}$$

In Equation 1, L denotes the crystal grain size, $\lambda$ denotes the X-ray wavelength, $\beta$ denotes the full width at half maximum of the (003) plane peak, and $\theta$ denotes the diffraction angle.

In example embodiments, the XRD analysis may be performed on dried powder of lithium-nickel metal oxide particles using Cu K$\alpha$ rays as the diffraction source, within a diffraction angle (2$\theta$) range of 10° to 120°, and at a scan rate of 0.0065°/s.

In some embodiments, $\beta$ in Equation 1 may use a full width at half maximum corrected for instrument-derived broadening. In one embodiment, Si may be used as a standard material to reflect the instrument-derived contribution. In this case, a corrected value obtained by subtracting the full width at half maximum of the Si (220) plane peak from the measured FWHM may be used as $\beta$.

When the content of nickel within the particles increases, the mechanical strength and chemical stability of the cathode active material may deteriorate, potentially causing particle cracking during the pressing process for forming the cathode active material layer 110. Consequently, an electrolyte may penetrate into the particles, leading to gas generation due to side reactions.

In addition, volumetric shrinkage and expansion of the cathode active material may occur during repeated charge and discharge, which may further exacerbate particle cracking in high-nickel cathode materials.

When the crystal grain size falls within the above range, the strength of the third cathode active material may be increased, and the grain boundary or particle boundary area may be reduced, thereby reducing particle cracking.

Therefore, gas generation caused by repeated charging and discharging may be suppressed, and cracking due to volume shrinkage and expansion may also be reduced. Consequently, stable capacity properties may be provided even in high-temperature environments, and the cycle life properties of the lithium secondary battery may be improved.

The second cathode active material and the third cathode active material may not include the coating layer. In some embodiments, the second cathode active material and the third cathode active material may not include the coating layer included in the first cathode active material, and may include a coating layer that is different from the coating layer present in the first cathode active material.

According to some embodiments, the second cathode active material and the third cathode active material may not be identical to each other. In addition, the second cathode active material and the third cathode active material may not be identical to the first cathode active material. The term "not identical" may mean that at least one of the following properties is different: the composition of the lithium-nickel metal oxide, the crystal grain size, the primary particle agglomeration structure, the sizes of the primary particles and secondary particles, the presence or absence of a coating layer, or the composition of the coating layer. The term "identical" may mean substantially the same within a range that includes typical measurement errors.

For example, when the first cathode active material includes a lithium-sulfur compound and a lithium-aluminum compound, the second cathode active material may include a coating layer containing a lithium-aluminum compound, and the second cathode active material may not be identical to the first cathode active material.

In example embodiments, when the cathode active material layer includes the second cathode active material, the content of the second cathode active material may be 10 wt% to 50 wt% based on the total weight of the cathode active material layer. In some embodiments, the content of the second cathode active material may be 15 wt% to 35 wt% or 20 wt% to 30 wt% based on the total weight of the cathode active material layer.

In example embodiments, when the cathode active material layer includes the third cathode active material, the content of the third cathode active material may be 10 wt% to 50 wt% based on the total weight of the cathode active material layer. In some embodiments, the content of the third cathode active material may be 15 wt% to 35 wt% or 20 wt% to 30 wt% based on the total weight of the cathode active material layer.

Within the above range, when the first cathode active material, the second cathode active material, and/or the third cathode active material are used together, the high-temperature cycle life properties of the lithium secondary battery may be further enhanced.

In example embodiments, the cathode active material layer 110 may further include a binder, a conductive material, and a dispersant.

For example, the cathode 100 may be fabricated by mixing and stirring the cathode active material, a binder, and a conductive material in a solvent together with a dispersant to prepare a cathode slurry, applying the cathode slurry to the cathode current collector 105, drying the solvent, and then roll-pressing.

The binder may include an organic binder such as polyvinylidene fluoride (PVDF), vinylidene fluoride-hexafluoropropylene copolymer (PVDF-co-HFP), polyacrylonitrile, polymethyl methacrylate, and the like.; or an aqueous binder such as styrene-butadiene rubber (SBR).

The conductive material may include carbon-based conductive materials such as graphite, carbon black, graphene, and carbon nanotubes; metal-based conductive materials such as tin, tin oxide, and titanium oxide; or perovskite materials such as $LaSrCoO_3$, and $LaSrMnO_3$.

For example, the cathode current collector 105 may include stainless steel, nickel, aluminum, titanium, copper, or an alloy thereof.

In example embodiments, the cathode active material layer 110 may include a first cathode active material layer and a second cathode active material layer sequentially stacked on at least one surface of the cathode current collector (not shown). The first cathode active material layer and the second cathode active material layer may each include a cathode active material, a binder, and a conductive material. At least one of the types and contents of the components included in the first cathode active material layer and the second cathode active material layer may be different.

According to some embodiments, the first cathode active material layer and the second cathode active material layer may each independently include at least one cathode active material selected from the group consisting of the first cathode active material, the second cathode active material, and the third cathode active material. In this case, at least one of the types and contents of the cathode active material included in the first cathode active material layer and the second cathode active material layer may be different.

For example, the first cathode active material layer may include a first cathode active material, and the second cathode active material layer may include a second cathode active material. Alternatively, the first cathode active material layer and the second cathode active material layer may include a first cathode active material, and the content of the first cathode active material included in each layer may be different.

According to some embodiments, the content of the binder in the total weight of the first cathode active material layer may be greater than or equal to the content of the binder in the total weight of the second cathode active material layer. For example, the content of the binder in the first cathode active material layer may be 0.9 wt% to 1.5 wt% based on the total weight of the first cathode active material layer, and the content of the binder in the second cathode active material layer may be 0.1 wt% to 0.8 wt% based on the total weight of the second cathode active material layer.

Accordingly, the first cathode active material layer adjacent to the cathode current collector 105 may be more firmly attached to the current collector, thereby securing the durability of the cathode, and the second cathode active material layer may relatively increase the amount of cathode active material while reducing the content of the binder, thereby increasing the capacity of the battery.

In example embodiments, the first cathode active material layer and the second cathode active material layer may each independently include at least one of the first cathode active material and the second cathode active material. However, at least one of the first cathode active material layer and the second cathode active material layer may include the first cathode active material.

For example, the first cathode active material layer may include a first cathode active material, and the second cathode active material layer may include a second cathode active material.

In example embodiments, the total weight of the first cathode active material layer and the second cathode active material layer may refer to the total weight of the cathode active material layer. For example, when the thicknesses of the first cathode active material layer and the second cathode active material layer are the same, and the content of the first cathode active material in the first cathode active material layer is about 90 wt%, and the content of the first cathode active material in the second cathode active material layer is about 40 wt%, the content of the first cathode active material in the total weight of the cathode active material layer may be calculated as about 65 wt%.

In example embodiments, the ratio of the content of the first cathode active material to the content of the second cathode active material, based on the total weight of the cathode active material layer, may be 1 to 4. In some embodiments, the ratio of the content of the first cathode active material to the content of the second cathode active material, based on the total weight of the cathode active material layer, may be 1 to 2.5.

Within the above range, the cathode active material layer may include a higher content of the first cathode active material, which is more stable at high temperatures, than the second cathode active material, thereby improving the high-temperature properties of the battery.

In example embodiments, the anode 130 may include an anode active material layer 120 on at least one surface of an anode current collector 125. The anode active material layer 120 may include an anode active material. For example, the anode active material may include a material capable of absorbing and releasing lithium ions.

In example embodiments, the anode active material may include a silicon-based active material. The silicon-based active material may be incorporated into the anode active material layer to improve the capacity and cycle life properties of the anode. Accordingly, the cycle life properties of the battery, particularly the capacity retention properties during fast charge and discharge, may be improved.

For example, the silicon-based active material may include silicon, a silicon alloy, silicon oxide, metal-doped silicon oxide, silicon carbide, a silicon-carbon composite (Si-C), silicon-containing core-shell particles or the like. These may be used singly or in combination of two or more thereof.

In example embodiments, the silicon-based active material may include a doping metal. For example, the doping metal may include at least one of Li, Mg, Al, Ca, Fe, Ti and V, and may be doped by substituting for silicon sites with the doping metal in the silicon-based active material.

In example embodiments, the content of the silicon-based active material may be 5 wt% to 30 wt% based on the total weight of the anode active material layer. According to some embodiments, the content of the silicon-based active material may be 10 wt% to 20 wt% or 10 wt% to 15 wt% based on the total weight of the anode active material layer.

Within the above range, the battery properties may be maintained similar to the initial state when the battery is charged and discharged under harsh conditions (high-temperature environment, ultra-fast charging, and the like.) without deteriorating the long-term durability of the anode.

In addition to silicon-based active materials, the anode active material may further include materials known in the art capable of absorbing and releasing lithium ions. Examples include carbon-based materials such as crystalline carbon, amorphous carbon, carbon composites, and carbon fibers; a lithium alloy; and the like.

Examples of the amorphous carbon may include hard carbon, coke, mesocarbon microbead (MCMB) calcined at 1500°C or lower, mesophase pitch-based carbon fiber (MPCF) or the like.

Examples of the crystalline carbon may include graphite-based carbon such as artificial graphite, natural graphite, graphitized coke, graphitized MCMB, graphitized MPCF or the like.

Other elements included in the lithium alloy may include, for example, aluminum, zinc, bismuth, cadmium, antimony, silicon, lead, tin, gallium, indium or the like.

Preferably, the anode active material further includes artificial graphite.

In example embodiments, the anode active material layer 120 may further include a binder, a conductive material, a dispersant and the like.

For example, the anode 130 may be fabricated by mixing and stirring the anode active material, a binder, and a conductive material in a solvent together with a dispersant to prepare an anode slurry, applying the anode slurry to the anode current collector 125, drying the solvent, and then roll-pressing.

As the binder and the conductive material, materials which are substantially the same as or similar to the above-described materials used in the cathode may be used. In some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

In example embodiments, the anode current collector 125 may include, for example, gold, stainless steel, nickel, aluminum, titanium, copper, or an alloy thereof, and preferably, copper or a copper alloy.

In example embodiments, the anode active material layer 120 may include a first anode active material layer and a second anode active material layer sequentially stacked on at least one surface of the anode current collector (not shown). The first anode active material layer and the second anode active material layer may each include an anode active material, a binder, and a conductive material. At least one of the types and contents of the components included in the first anode active material layer and the second anode active material layer may be different.

According to some embodiments, the weight-based content of the binder in the first anode active material layer may be greater than or equal to the weight-based content of the binder in the second anode active material layer. For example, the weight-based content of the binder in the first anode active material layer may be 1.0 wt% to 5.0 wt% based on the total weight of the first anode active material layer, and the weight-based content of the binder in the second anode active material layer may be 0.1 wt% to 1.0 wt% based on the total weight of the second anode active material layer.

Therefore, the first anode active material layer adjacent to the anode current collector 125 may be more firmly attached to the current collector, thereby ensuring the durability of the anode. In addition, the second anode active material layer may relatively increase the amount of anode active material while reducing the content of the binder, thereby increasing the capacity of the battery. Furthermore, the pore resistance of the second anode active material layer may be reduced, thereby improving the fast charging performance.

In example embodiments, the anode may further include a primer layer (not shown) disposed between the anode active material layer 120 and the anode current collector 125 and including a binder. The primer layer may be a layer that is relatively thinner than the anode active material layer, may be substantially composed of a binder, and may function as an adhesive layer that firmly attaches the anode current collector 125 and the anode active material layer 120. Accordingly, the anode active material layer may relatively increase the amount of anode active material while reducing the content of the binder, thereby increasing the capacity of the battery. In addition, the electrode pore resistance of the second anode active material layer may be reduced, thereby improving the fast charging performance.

In some embodiments, the anode 130 may have an area greater than that of the cathode 100. In this case, lithium ions generated from the cathode 100 may smoothly migrate to the anode 130 without being precipitated during the process.

In example embodiments, a separator 140 may be interposed between the cathode 100 and the anode 130.

For example, the separator 140 may be interposed between the cathode 100 and the anode 130. The separator 140 may include a porous polymer film made of a polyolefin polymer such as ethylene homopolymer, propylene homopolymer, ethylene/butene copolymer, ethylene/hexene copolymer, or ethylene/methacrylate copolymer. The separator 140 may include a nonwoven fabric made of glass fibers having a high melting point, polyethylene terephthalate fibers, and the like.

For example, an electrode cell may be configured including the cathode 100, the anode 130, and the separator 140.

For example, a plurality of electrode cells may be stacked to form an electrode assembly 150.

For example, the electrode assembly 150 may be formed by winding, stacking, or z-folding the electrode cells including the cathode 100, the anode 130, and the separator 140.

The lithium secondary battery according to embodiments may include an electrolyte. For example, the above-described electrode assembly 150 may be accommodated in a case 160 together with the electrolyte to form a lithium secondary battery.

In example embodiments, a non-aqueous electrolyte may be used as the electrolyte. The non-aqueous electrolyte may include a lithium salt as an electrolyte.

The lithium salt may be represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and the like., may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, tetrahydrofuran, and the like may be used. These compounds may be used alone or in combination of two or more thereof.

In example embodiments, the electrolyte may further include an additive. The additive may include dimethylsulfoxide, acetonitrile, dimethoxyethane, diethoxyethane, vinylene carbonate, sulfolane, $\gamma$-butyrolactone, propylene sulfite, and tetrahydrofuran.

The lithium secondary battery according to embodiments may include electrode leads 107, 127 connected to electrodes 100, 130 and protruding outside the case 160.

For example, the battery may include a cathode lead 107 connected to the cathode 100 and protruding outside the case 160, and an anode lead 127 connected to the anode 130 and protruding outside the case 160.

For example, the cathode 100 and the cathode lead 107 may be electrically connected. Similarly, the anode 130 and the anode lead 127 may also be electrically connected.

For example, the cathode lead 107 may be electrically connected to the cathode current collector 105. In addition, the anode lead 127 may be electrically connected to the anode current collector 125.

The cathode current collector 105 of the cathode 100 and the anode current collector 125 of the anode 130 may each include a notching portion. The notching portion may be provided as an electrode tab, for example. The notching portion may include a cathode notching portion protruding from the cathode current collector 105 and an anode notching portion protruding from the anode current collector 125.

For example, the cathode current collector 105 may include a protrusion portion (cathode tab) on one side. The cathode active material layer 110 may not be disposed on the cathode tab. The cathode tab may be formed integrally with the cathode current collector 105 or may be connected thereto by welding or the like. The cathode current collector 105 and the cathode lead 107 may be electrically connected through the cathode tab.

The anode current collector 125 may include a protrusion portion (anode tab) on one side. The anode active material layer 120 may not be disposed on the anode tab. The anode tab may be formed integrally with the anode current collector 125 or may be connected thereto by welding or the like. The anode current collector 125 and the anode lead 127 may be electrically connected through the anode tab.

In one embodiment, the electrode assembly 150 may include a plurality of cathodes and a plurality of anodes. For example, the plurality of cathodes and the plurality of anodes may be alternately arranged, and a separator may be interposed between the cathodes and the anodes. Accordingly, a lithium secondary battery according to one embodiment may include a plurality of cathode tabs and a plurality of anode tabs protruding from each of the plurality of cathodes and the plurality of anodes.

In one embodiment, the cathode tabs (or anode tabs) may be stacked, pressed, and welded to form a cathode tab stack (or anode tab stack). The cathode tab stack may be electrically connected to the cathode lead 107. In addition, the anode tab stack may be electrically connected to the anode lead 127.

The lithium secondary battery may be manufactured, for example, in a cylindrical shape, a prismatic shape, a pouch shape or a coin shape.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

## Synthesis Example 1-1

(1) Preparation of lithium-nickel metal oxide particles

$NiSO_4$, $CoSO_4$, and $MnSO_4$ were mixed at a ratio of 0.55:0.12:0.33 (mol) in distilled water from which dissolved oxygen had been removed by bubbling $N_2$ for 24 hours. The mixed solution was then introduced into a reactor at 50°C, and a co-precipitation reaction was performed for 48 hours using NaOH and $NH_3H_2O$ as a precipitant and a chelating agent, to obtain $Ni_{0.55}Co_{0.12}Mn_{0.33}(OH)_2$ as the transition metal precursor. The obtained precursor was dried at 80 °C for 12 hours and then further dried at 110 °C for 12 hours.

Lithium hydroxide and the transition metal precursor were added to a dry high-speed mixer at a ratio of 1.01:1 and uniformly mixed for 5 minutes.

The mixture was placed in a calcination furnace, heated to 730 to 750 °C at a rate of 2 °C/min, and maintained at 730 to 750 °C for 10 hours. Oxygen was continuously supplied at a flow rate of 20 L/min during the heating and holding steps. After completion of the calcination, the mixture was naturally cooled to room temperature, then pulverized and classified to obtain lithium-nickel metal oxide particles having a composition of $LiNi_{0.55}Co_{0.12}Mn_{0.33}O_2$ and a secondary particle structure in which primary particles were agglomerated.

(2) Formation of coating layer

The lithium-nickel metal oxide particles prepared above and $Al_2O_3$ powder were dry-mixed to form a preliminary coating on the surface of the lithium-nickel metal oxide particles. In this case, the $Al_2O_3$ was added in an amount of 0.3 mol% based on the total molar amount of the lithium-nickel metal composite oxide particles.

1.2 wt% of ammonium sulfate (($NH_4$)$_2SO_4$) powder, based on the total weight of the lithium-nickel metal oxide particles, was added to 10 wt% of deionized water, based on the total weight of the preliminary coated lithium-nickel metal oxide particles, and stirred to prepare an aqueous solution of a sulfur-containing compound.

The aqueous solution of the sulfur-containing compound was added to and mixed with the preliminary coated lithium-nickel metal oxide particles to prepare a mixture. The mixture was then placed in a calcination furnace, heated to 400 °C at a rate of 2 °C/min while supplying oxygen at a flow rate of 20 L/min, and maintained at this temperature for 10 hours. After calcination, the product was pulverized and classified through a 325-mesh sieve to obtain a first cathode active material.

### Synthesis Example 1-2

A first cathode active material was obtained in the same manner as in Synthesis Example 1-1, except that ammonium phosphate (($NH_4$)$_2HPO_4$) was used instead of ammonium sulfate.

### Synthesis Example 1-3

A first cathode active material was obtained in the same manner as in Synthesis Example 1-1, except that $WO_3$ was used instead of $Al_2O_3$ as the metal oxide in the preliminary coating step.

### Synthesis Example 2-1

Lithium-nickel metal oxide particles of $LiNi_{0.88}Co_{0.06}Mn_{0.06}O_2$ were prepared in the same manner as in Synthesis Example 1-1 (step 1)), except that $Ni_{0.88}Co_{0.06}Mn_{0.06}(OH)_2$ was prepared as the transition metal precursor.

The prepared lithium-nickel metal oxide particles were subjected to water washing using an amount of water equal to the weight of the particles, followed by drying, to obtain a second cathode active material.

### Synthesis Example 3-1

A third cathode active material was obtained in the same manner as in Synthesis Example 1-1 (step 1)), except that $Ni_{0.88}Co_{0.06}Mn_{0.06}(OH)_2$ was used as the transition metal precursor and the calcination was performed for 13 hours to prepare lithium-nickel metal oxide particles of $LiNi_{0.88}Co_{0.06}Mn_{0.06}O_2$.

The crystal grain size of the third cathode active material was calculated to be approximately 300 nm using Equation 1 described above based on XRD analysis. The detailed XRD analysis equipment and measurement conditions are shown in Table 1 below.

[TABLE 1]

| XRD (X-Ray Diffractometer) EMPYREAN | |
|---|---|
| Maker | PANalytical |
| Anode material | Cu |
| K-Alpha 1 wavelength | 1.540598 Å |
| Generator voltage | 45 kV |
| Tube current | 40 mA |
| Scan range | 10 - 120° |
| Scan step size | 0.0065° |
| Divergence slit | 1/4° |

(continued)

| XRD (X-Ray Diffractometer) EMPYREAN | |
| --- | --- |
| Antiscatter slit | 1/2° |

## Experimental Example 1: Confirmation of layered structure of the surface portion

Transmission electron microscopy-selected area electron diffraction (TEM-SAED) analysis was performed to analyze the crystal phase of the primary particles of the second cathode active material prepared in Synthesis Example 2-1. The second cathode active material prepared in Synthesis Example 2-1 was subjected to focused ion beam (FIB) processing to prepare a specimen. A diffraction image was then obtained using TEM by defining a selected area aperture for the cross-section and switching to diffraction mode.

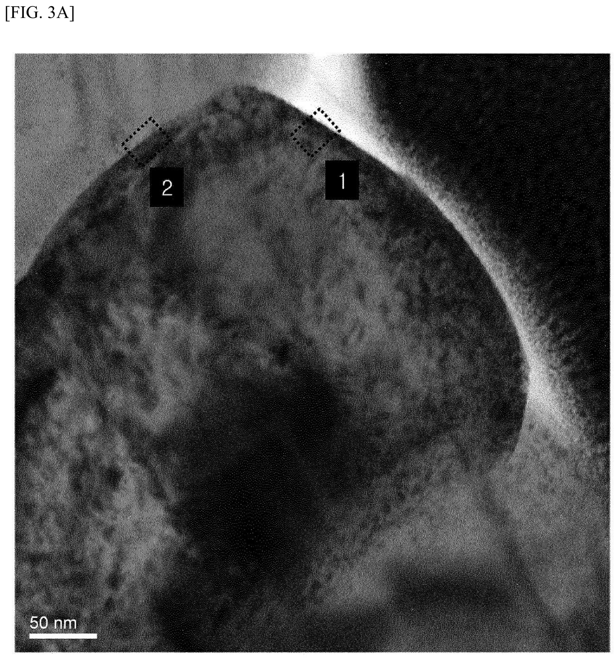

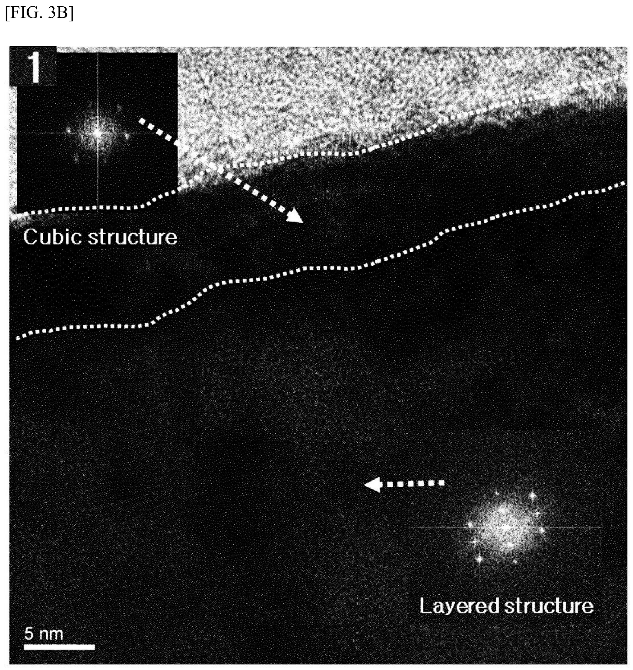

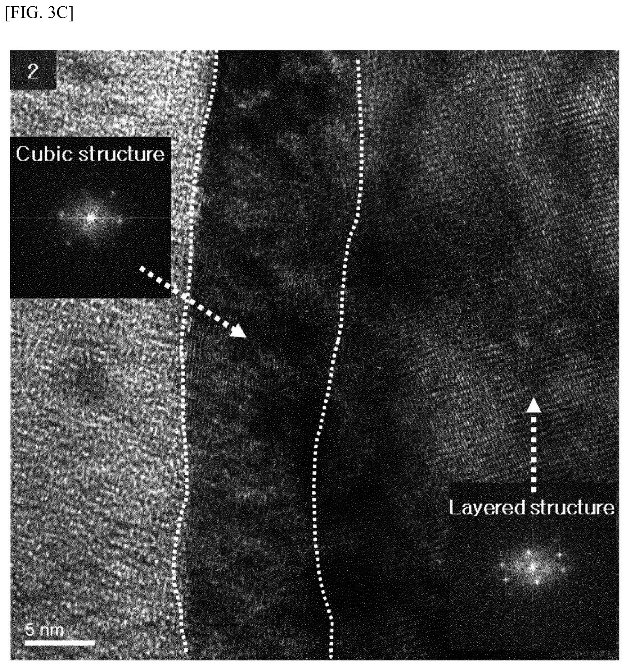

FIGS. 3A to 3C illustrate TEM-SAED images of the primary particles of the second cathode active material prepared in Synthesis Example 2-1. FIGS. 3B and 3C show enlarged images of points 1 and 2 indicated in FIG. 3A, respectively.

Referring to FIGS. 3A to 3C, the SAED images revealed a cubic phase rather than a layered structure at both points (1 and 2) near the particle surface. Based on the observation of the cubic phase near the surface, it can be inferred that, in the case of the second cathode active material of Synthesis Example 2-1, the cubic phase is more abundant than the layered structure within a region extending about 20 nm from the primary particle surface.

## Experimental Example 2: Confirmation of coating layer

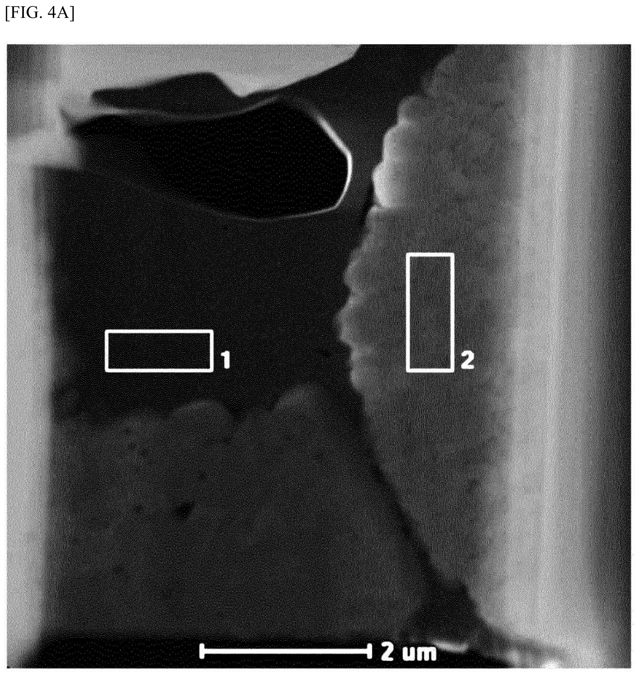

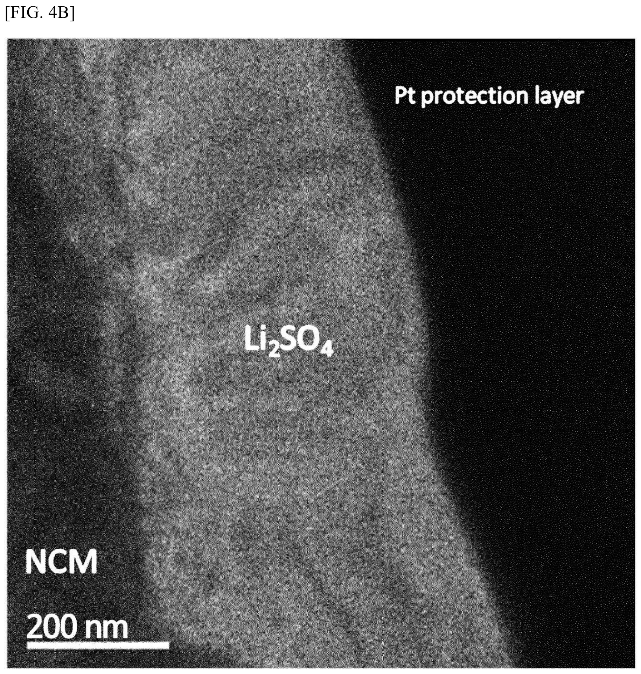

TEM images were taken to confirm the coating layer of the first cathode active material prepared in Synthesis Example 1-1. The process was performed in the same manner as in Experimental Example 1, and TEM images of the first cathode active material prepared in Synthesis Example 1-1 are shown in FIGS. 4A and 4B. The magnification of FIG. 4B is higher than that of FIG. 4A.

Points 1 and 2 in FIG. 4A correspond to $Li_2SO_4$ and lithium-nickel metal oxide, respectively. That is, it can be confirmed that a coating layer containing $Li_2SO_4$ is present at the interfaces between the primary particles. FIG. 4B is a TEM image of the surface of the primary particles at a higher magnification, showing a coating layer containing $Li_2SO_4$ on the surface of the lithium-nickel metal oxide (NCM) particles. The first cathode active material of Synthesis Example 1-1 had a coating layer containing $Li_2SO_4$ formed on the surface of the primary particles, i.e., at the interfaces between the primary particles within the secondary particles.

In addition, a SEM image of the particle cross-section of the first cathode active material prepared in Synthesis Example 1-3 was taken, and an EDS elemental mapping image was obtained to confirm the element distribution in the cross-section.

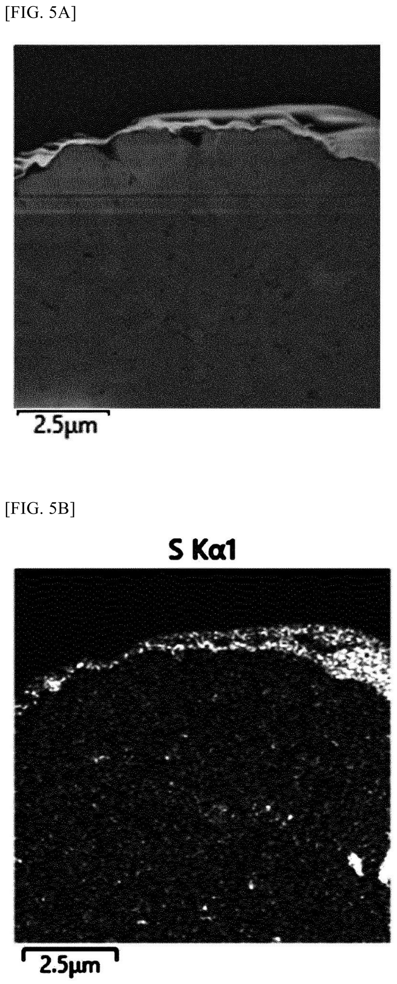

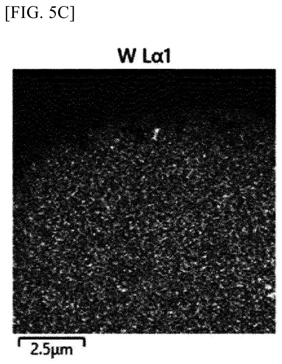

FIG. 5A illustrates a cross-sectional SEM image of the particle of the first cathode active material prepared in Synthesis Example 1-3. FIGS. 5B and 5C illustrate EDS elemental mapping images of sulfur and tungsten elements, respectively, for the image in FIG. 5A.

Referring to FIGS. 5A to 5C, a coating layer was formed on the outer surface of the particle of the first cathode active material prepared in Synthesis Example 1-3. Sulfur was included in this coating layer, and some sulfur was also observed to be distributed at the interfaces between the primary particles within the secondary particle. In addition, tungsten appeared to be distributed both inside and outside the particle, indicating that a tungsten- and sulfur-containing coating layer was formed at the interfaces between the primary particles within the secondary particle.

## Experimental Example 3: Measurement and evaluation of surface resistance

The cathode active materials prepared in Synthesis Examples 1-1 and 1-3 were mixed with a binder (PVDF) and coated on an aluminum foil to fabricate electrodes. To analyze the inherent conductivity of the cathode active materials and exclude the conductivity-enhancing effects of conductive additives, the electrodes were fabricated by mixing only a minimal amount of binder (1 wt%), unlike typical electrode compositions.

The electrical resistance distribution of the cut cross-sections of the electrodes was analyzed using an AFM in SSRM mode.

Specifically, the electrodes were cut, and a Bruker AFM tip (contact area radius: 30 nm) coated with a conductive material was placed in contact with a 200 nm × 200 nm area of the cross-section. A voltage of 3 V was applied, and analysis was performed in SSRM mode to obtain images of the diffusion resistance distribution.

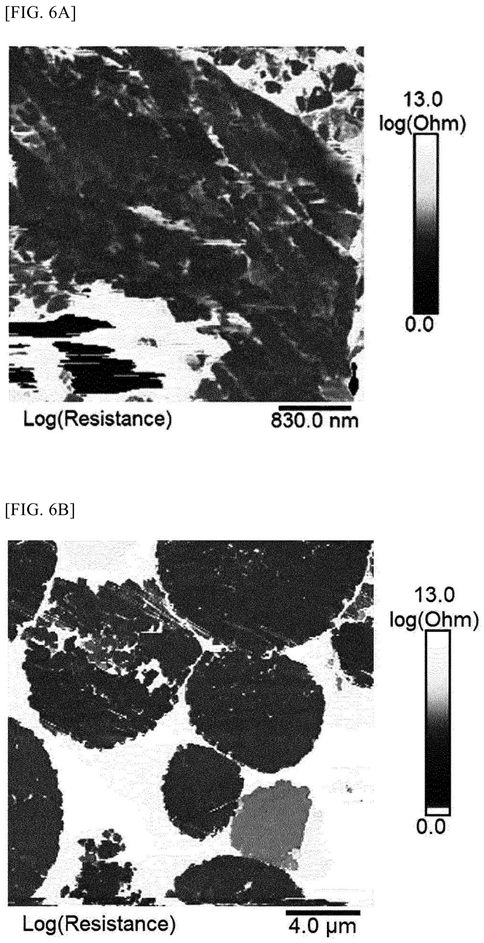

FIGS. 6A to 6D illustrate SSRM diffusion resistance distribution images of electrodes including the first cathode active materials of Synthesis Examples 1-3 and 1-1. Specifically,

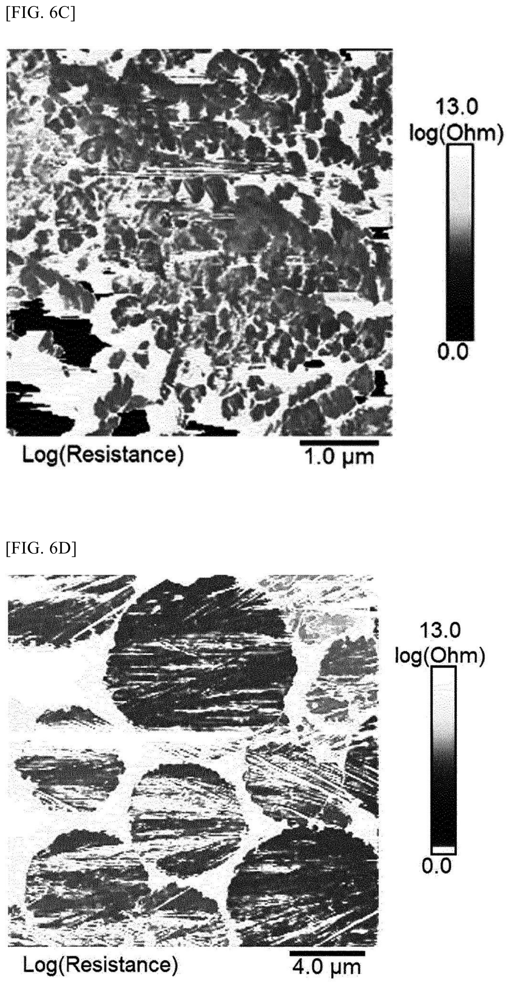

FIG. 6A is an SSRM image of an electrode including the first cathode active material of Synthesis Example 1-3, FIG. 6B is a high-magnification SSRM image of an electrode including the first cathode active material of Synthesis Example 1-3, FIG. 6C is an SSRM image of an electrode including the first cathode active material of Synthesis Example 1-1, and FIG. 6D is a high-magnification SSRM image of an electrode including the first cathode active material of Synthesis Example 1-1.

Referring to FIGS. 6A to 6D, it can be seen that the internal resistance of the first cathode active material was reduced by the inclusion of a tungsten-containing coating layer.

## Example 1

N-methyl pyrrolidone (NMP) was added to a mixture containing 98.08 wt% of the first cathode active material prepared in Synthesis Example 1-1, 0.72 wt% of MWCNTs (including 20 wt% of a CNT dispersing agent) as a conductive material, and 1.2 wt% of polyvinylidene fluoride (PVdF) as a binder to prepare a slurry. The slurry was then uniformly applied to an aluminum foil having a thickness of 12 $\mu$m, and then dried and roll-pressed to a density of 3.6 g/cc to fabricate a cathode for a secondary battery.

Water was added to a mixture containing 81.45 wt% of artificial graphite ($D_{50}$: 17 $\mu$m), 15 wt% of SiOx (0<x<2) as a silicon-based active material, 0.25 wt% of SWCNTs (including 60 wt% of a CNT dispersion agent) as a conductive material, 1.3 wt% of CMC as a thickener, and 2 wt% of SBR as a binder (total solid content: 100 wt%) to prepare an anode slurry. The prepared anode slurry was then coated on one surface of a copper current collector (copper foil having a thickness of 8 $\mu$m), and then dried and roll-pressed to a density of 1.6 g/cc to form an anode active material layer, thereby fabricating an anode.

The cathode and anode were notched to a predetermined size and stacked, with a separator (polyethylene, thickness: 13 $\mu$m) interposed between the cathode and anode to form an electrode cell, and then the tab portions of the cathode and anode were welded, respectively. The assembly of the welded cathode/separator/anode was placed into a pouch, and three sides of the pouch were sealed, leaving one side open for electrolyte injection. In this case, a portion having the electrode tab was included in the sealed part. After injecting the electrolyte through the electrolyte injection side, the remaining electrolyte injection side was also sealed, and the cell was left to be impregnated for 12 hours or more to manufacture a lithium secondary battery.

A solution, prepared by dissolving 1.1 M LiPF$_6$ in a mixed solvent of ethyl carbonate (EC), ethyl methyl carbonate (EMC) and ethyl acetate (in a volume ratio of EC/EMC = 25/75), and then adding 7 wt% of fluoroethylene carbonate (FEC), 0.5 wt% of 1,3-propene sultone (PRS), 0.5 wt% of 1,3-propane sultone (PS), and 0.5 wt% of ethylene sulfate (ESA), was used as the electrolyte.

Then, the battery was subjected to heat-press pre-charging for 60 minutes at an average current of 0.5C. After stabilization for 12 hours or more, degassing was performed and aging was conducted for 24 hours or more. Thereafter, formation charging and discharging were performed (charging conditions: CC-CV 0.25C, 4.2 V, 0.05C cut-off; discharging conditions: CC 0.25C, 2.5 V cut-off).

Subsequently, standard charging and discharging were performed (charging conditions: CC-CV 0.33C, 4.2 V, 0.05C cut-off; discharging conditions: CC 0.33C, 2.5 V cut-off).

## Example 2

A lithium secondary battery sample was manufactured in the same manner as in Example 1, except that the first cathode active material prepared in Synthesis Example 1-2 was used instead of the first cathode active material prepared in Synthesis Example 1-1.

## Example 3

A lithium secondary battery sample was manufactured in the same manner as in Example 1, except that the first cathode active material prepared in Synthesis Example 1-3 was used instead of the first cathode active material prepared in Synthesis Example 1-1.

## Example 4

A lithium secondary battery sample was manufactured in the same manner as in Example 1, except that 68.656 wt% of the first cathode active material prepared in Synthesis Example 1-1 and 29.424 wt% of the second cathode active material prepared in Synthesis Example 2-1 were used instead of 98.08 wt% of the first cathode active material prepared in Synthesis Example 1-1.

### Example 5

A lithium secondary battery sample was manufactured in the same manner as in Example 1, except that 68.656 wt% of the first cathode active material prepared in Synthesis Example 1-1 and 29.424 wt% of the third cathode active material prepared in Synthesis Example 3-1 were used instead of 98.08 wt% of the first cathode active material prepared in Synthesis Example 1-1.

### Example 6

N-methyl pyrrolidone (NMP) was added to a mixture containing 98.08 wt% of the first cathode active material prepared in Synthesis Example 1-1, 0.72 wt% of MWCNTs (including 20 wt% of a CNT dispersing agent) as a conductive material, and 1.2 wt% of polyvinylidene fluoride (PVdF) as a binder to prepare a slurry for the first cathode active material layer.

N-methyl pyrrolidone (NMP) was added to a mixture containing 98.68 wt% of the first cathode active material prepared in Synthesis Example 1-1, 0.72 wt% of MWCNTs (including 20 wt% of a CNT dispersing agent) as a conductive material, and 0.6 wt% of polyvinylidene fluoride (PVdF) as a binder to prepare a slurry for the second cathode active material layer.

Using a slot die concept coating facility equipped with a dual shim consisting of upper and lower layers, the slurry for the first cathode active material layer and the slurry for the second cathode active material layer were uniformly applied at the same weight ratio to one surface of an aluminum foil having a thickness of 12 $\mu$m, and then dried and roll-pressed to a density of 3.6 g/cc to fabricate a cathode for a secondary battery. In this case, a first cathode active material layer in direct contact with the aluminum foil was formed using the slurry for the first cathode active material layer, and a second cathode active material layer was formed on the first cathode active material layer using the slurry for the second cathode active material layer.

A lithium secondary battery sample was manufactured in the same manner as in Example 1, except that the cathode prepared as described above was used.

In this case, the content of the first cathode active material prepared in Synthesis Example 1-1 was 98.38 wt% based on the total weight of the first cathode active material layer and the second cathode active material layer.

### Example 7

N-methyl pyrrolidone (NMP) was added to a mixture containing 69.656 wt% of the first cathode active material prepared in Synthesis Example 1-1, 29.424 wt% of the third cathode active material prepared in Synthesis Example 3-1, 0.72 wt% of MWCNTs (including 20 wt% of a CNT dispersing agent) as a conductive material, and 1.2 wt% of polyvinylidene fluoride (PVdF) as a binder to prepare a slurry for the first cathode active material layer.

N-methyl pyrrolidone (NMP) was added to a mixture containing 69.076 wt% of the first cathode active material prepared in Synthesis Example 1-1, 29.604 wt% of the third cathode active material prepared in Synthesis Example 3-1, 0.72 wt% of MWCNTs (including 20 wt% of a CNT dispersing agent) as a conductive material, and 0.6 wt% of polyvinylidene fluoride (PVdF) as a binder to prepare a slurry for the second cathode active material layer.

A lithium secondary battery sample was manufactured in the same manner as in Example 6, except that the slurries prepared as described above were used.

In this case, the content of the first cathode active material prepared in Synthesis Example 1-1 was 68.866 wt% based on the total weight of the first cathode active material layer and the second cathode active material layer.

### Example 8

N-methyl pyrrolidone (NMP) was added to a mixture containing 39.232 wt% of the first cathode active material prepared in Synthesis Example 1-1, 58.848 wt% of the third cathode active material prepared in Synthesis Example 3-1, 0.72 wt% of MWCNT (including 20 wt% of a CNT dispersing agent) as a conductive material, and 1.2 wt% of polyvinylidene fluoride (PVdF) as a binder to prepare a slurry for the first cathode active material layer.

N-methyl pyrrolidone (NMP) was added to a mixture containing 98.68 wt% of the first cathode active material prepared in Synthesis Example 1-1, 0.72 wt% of MWCNTs (including 20 wt% of a CNT dispersing agent) as a conductive material, and 0.6 wt% of polyvinylidene fluoride (PVdF) as a binder to prepare a slurry for the second cathode active material layer.

A lithium secondary battery sample was manufactured in the same manner as in Example 6, except that the slurries prepared as described above were used.

In this case, the content of the first cathode active material prepared in Synthesis Example 1-1 was 68.956 wt% based on the total weight of the first cathode active material layer and the second cathode active material layer.

### Example 9

Water was added to a mixture containing 80.45 wt% of artificial graphite, 15 wt% of $SiO_x$ (0<x<2) as a silicon-based active material, 0.25 wt% of SWCNTs (including 60 wt% of a CNT dispersing agent) as a conductive material, 1.3 wt% of CMC as a thickener, and 3 wt% SBR as a binder to prepare a slurry for the first anode active material layer.

Water was added to a mixture containing 82.45 wt% of artificial graphite, 15 wt% of $SiO_x$ (0<x<2) as a silicon-based active material, 0.25 wt% of SWCNTs (including 60 wt% of a CNT dispersing agent) as a conductive material, 1.3 wt% of CMC as a thickener, and 1 wt% SBR as a binder to prepare a slurry for the second anode active material layer.

Using a slot die concept coating facility equipped with a dual shim consisting of upper and lower layers, the slurry for the first anode active material layer and the slurry for the second anode active material layer were coated at the same weight ratio on one surface of a copper current collector (copper foil having a thickness of 8 μm), and then dried and roll-pressed to a density of 1.6 g/cc to fabricate an anode for a lithium secondary battery. In this case, a first anode active material layer in direct contact with the copper foil was formed using the slurry for the first anode active material layer, and a second anode active material layer was formed on the first anode active material layer using the slurry for the second anode active material layer.

A lithium secondary battery sample was manufactured in the same manner as in Example 1, except that the anode prepared as described above was used.

### Example 10

An SBR aqueous solution was applied to one surface of a copper current collector (copper foil having a thickness of 8 μm) and dried to form a primer layer.

Water was added to a mixture containing 81.45 wt% of artificial graphite ($D_{50}$: 17 μm), 15 wt% of SiOx (0<x<2) as a silicon-based active material, 0.25 wt% of SWCNTs (including 60 wt% of a CNT dispersing agent) as a conductive material, 1.3 wt% of CMC as a thickener, and 2 wt% of SBR as a binder (total solid content: 100 wt%) to prepare an anode slurry.

The prepared anode slurry was coated on the primer layer, and then dried and roll-pressed to a density of 1.6 g/cc to form an anode active material layer, thereby fabricating an anode.

A lithium secondary battery sample was manufactured in the same manner as in Example 1, except that the anode prepared as described above was used.

In this case, the weight of the primer layer was 1.5 parts by weight based on 100 parts by weight of the anode active material layer.

### Example 11

A lithium secondary battery sample was manufactured in the same manner as in Example 1, except that 39.232 wt% of the first cathode active material prepared in Synthesis Example 1-1 and 58.848 wt% of the second cathode active material prepared in Synthesis Example 2-1 were used instead of 98.08 wt% of the first cathode active material prepared in Synthesis Example 1-1.

### Comparative Example 1

A lithium secondary battery sample was manufactured in the same manner as in Example 1, except that the second cathode active material prepared in Synthesis Example 2-1 was used instead of the first cathode active material prepared in Synthesis Example 1-1.

### Comparative Example 2

A lithium secondary battery sample was manufactured in the same manner as in Example 1, except that the silicon-based active material was not used in the anode slurry preparation, artificial graphite was used at 93.7 wt%, and a carbon-based conductive material was used at 3.0 wt% instead of 0.1 wt% of SWCNTs.

### Comparative Example 3

A lithium secondary battery sample was manufactured in the same manner as in Example 1, except that the second cathode active material prepared in Synthesis Example 2-1 was used instead of the first cathode active material prepared in Synthesis Example 1-1, the silicon-based active material was not used in the anode slurry preparation, artificial graphite was used at 93.7 wt%, and a carbon-based conductive material was used at 3.0 wt% instead of 0.1 wt% of SWCNTs.

The contents and/or types of the active materials, binders, and conductive materials in the cathode and anode active material layers of Examples 1 to 11 and Comparative Examples 1 to 3 are shown in Table 2 below. When multiple types are listed together, the content is indicated in parentheses, and the unit is wt%. In addition, for the multilayer active material layers of Examples 6 to 10, the composition of the first active material layer is shown below, and the composition of the second active material layer is shown above.

[TABLE 2]

| | Cathode active material layer | | Anode active material layer | | | |
|---|---|---|---|---|---|---|
| | Cathode active material | Binder | Artificial graphite | Silicon-based active material | Binder | Conductive material |
| Example 1 | A-1 (98.08) | 1.2 | 81.45 | 15 | 2 | D-1 (0.1) |
| Example 2 | A-2 (98.08) | 1.2 | 81.45 | 15 | 2 | D-1 (0.1) |
| Example 3 | A-3 (98.08) | 1.2 | 81.45 | 15 | 2 | D-1 (0.1) |
| Example 4 | A-1 (68.656) B-1 (29.424) | 1.2 | 81.45 | 15 | 2 | D-1 (0.1) |
| Example 5 | A-1 (68.656) C-1 (29.424) | 1.2 | 81.45 | 15 | 2 | D-1 (0.1) |
| Example 6 | A-1 (98.68) | 0.6 | 81.45 | 15 | 2 | D-1 (0.1) |
| | A-1 (98.08) | 1.2 | | | | |
| Example 7 | A-1 (69.076) C-1 (29.604) | 0.6 | 81.45 | 15 | 2 | D-1 (0.1) |
| | A-1 (68.656) C-1 (29.424) | 1.2 | | | | |
| Example 8 | A-1 (98.68) | 0.6 | 81.45 | 15 | 2 | D-1 (0.1) |
| | A-1 (39.232) C-1 (58.848) | 1.2 | | | | |
| Example 9 | A-1 (98.08) | 1.2 | 82.45 | 15 | 1 | D-1 (0.1) |
| | | | 80.45 | 15 | 3 | D-1 (0.1) |
| Example 10 | A-1 (98.08) | 1.2 | 81.45 | 15 | 0.5 | D-1 (0.1) |
| | | | - | - | 1.5* | - |
| Example 11 | A-1 (39.232) B-1 (58.848) | 1.2 | 81.45 | 15 | 2 | D-1 (0.1) |
| Comparative Example 1 | B-1 (98.08) | 1.2 | 81.45 | 15 | 2 | D-1 (0.1) |
| Comparative Example 2 | A-1 (98.08) | 1.2 | 93.7 | - | 2 | D-2 3.0 |
| Comparative Example 3 | B-1 (98.08) | 1.2 | 81.45 | - | 2 | D-2 3.0 |

**[0221]** * In Example 10, the content of the binder as a primer layer is expressed in parts by weight based on 100 parts by weight of the anode active material layer.

A-1: First cathode active material prepared in Synthesis Example 1-1
A-2: First cathode active material prepared in Synthesis Example 1-2
A-3: First cathode active material prepared in Synthesis Example 1-3

B-1: Second cathode active material prepared in Synthesis Example 2-1
C-1: Third cathode active material prepared in Synthesis Example 3-1
D-1: SWCNT conductive material
D-2: Carbon-based conductive material

The lithium secondary battery samples of the examples and comparative examples were evaluated for their properties according to the following experimental examples, and the results are shown in Table 3.

**Experimental Example 4: Evaluation of high-temperature cycle life properties**

A high-temperature cycle life evaluation was performed on the lithium secondary battery samples of the examples and comparative examples. The batteries were charged at 45 °C under constant current/constant voltage (CC/CV) conditions to a voltage corresponding to a state of charge (SOC) of 98% at 0.3C, followed by a cut-off at 0.05C. The batteries were then discharged under constant current (CC) conditions to a voltage corresponding to SOC 4% at 0.5C, and the discharge capacity was measured. This procedure was repeated for 1,000 cycles, and the capacity retention was calculated as the percentage of the discharge capacity after 800 and 1,000 cycles divided by the discharge capacity at the first cycle.
When measuring capacity during repeated cycling, if the capacity retention reached 80% or the battery was damaged (e.g., by venting), the number of cycles at which the issue occurred was recorded in Table 3.

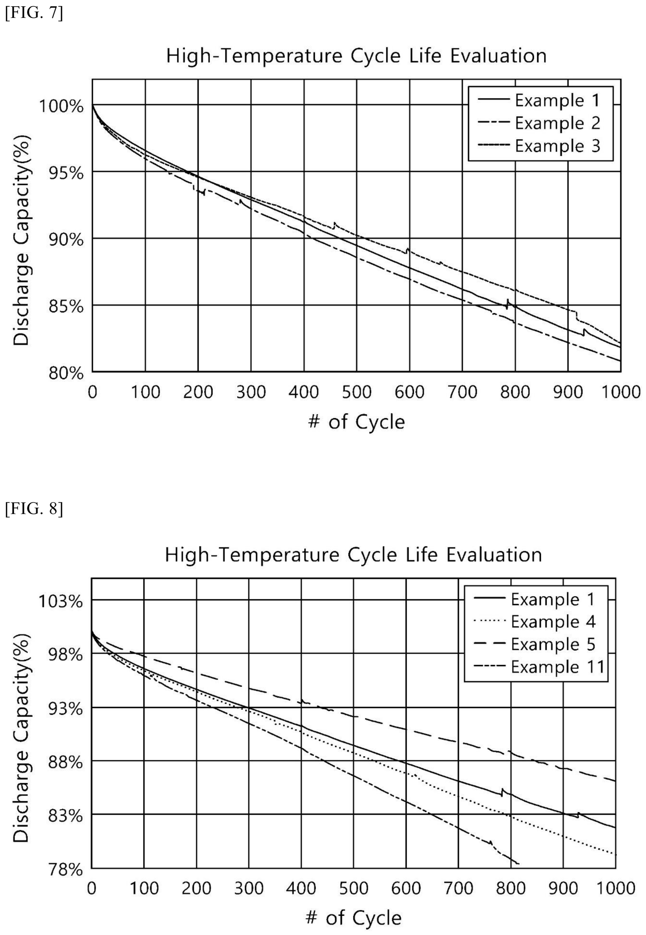

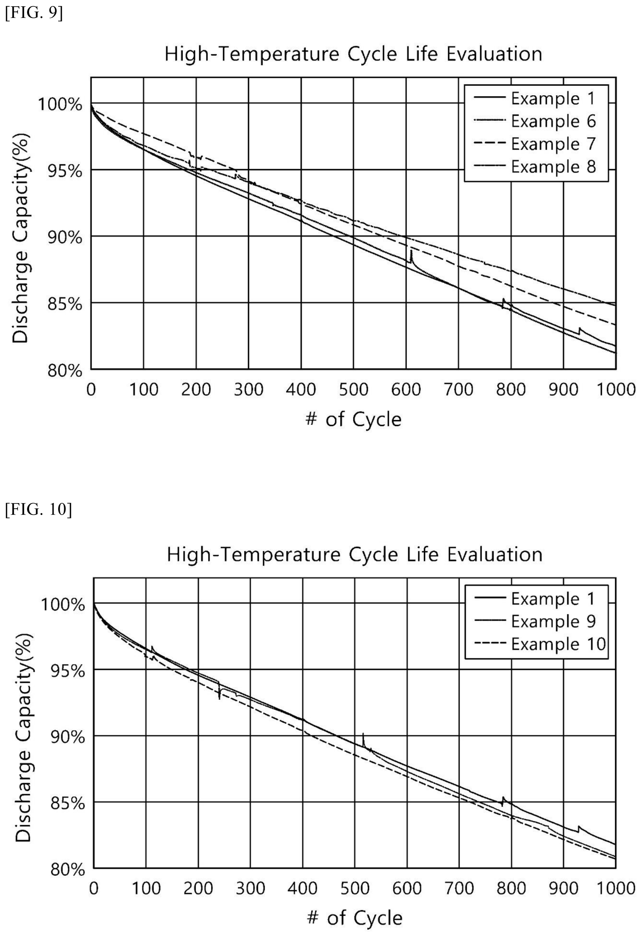

FIGS. 7 to 11 are graphs showing the discharge capacity retention during high-temperature charge and discharge as a function of the number of cycles for the batteries of the examples and comparative examples.

**Experimental Example 5: Evaluation of fast charge and discharge cycle life properties**

The lithium secondary battery samples from the examples and comparative examples were charged at 25 °C at 3.0C/2.75C/2.5C/2.25C/2.0C/1.75C/1.5C/1.25C/1.0C/0.75C/0.5C at a temperature of 25 °C using a step charge method at a C-rate of 3.0C/2.75C/2.5C/2.25C/2.0C/1.75C/1.5C/1.25C/1.0C/0.75C/0.5C, reaching 72% DOD within 35 minutes, and then discharged at 0.5C. This charge and discharge process was defined as one cycle, and the cycles were repeated 400 times. The capacity retention was calculated as the percentage of the discharge capacity after 400 cycles divided by the discharge capacity at the first cycle.

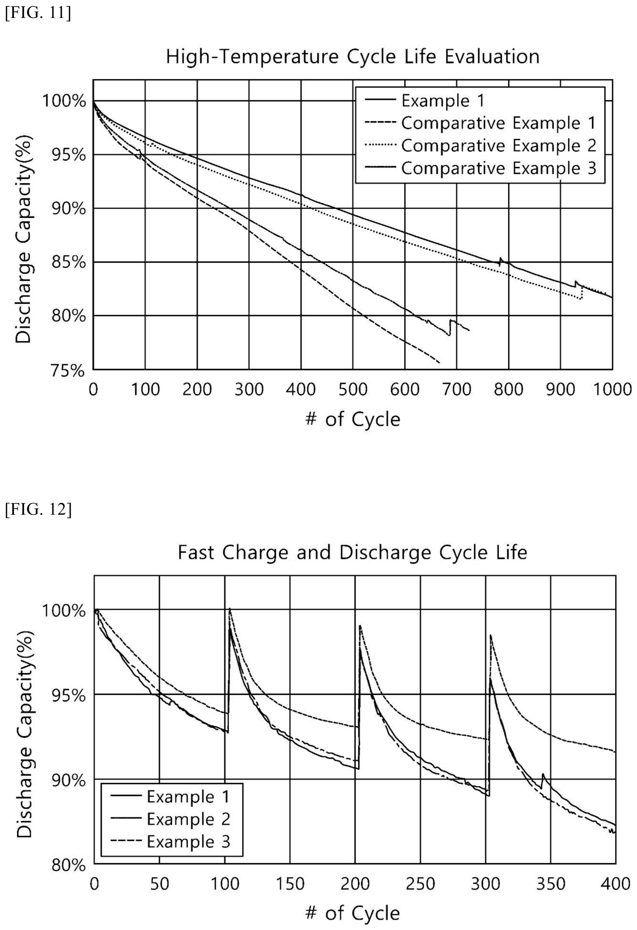

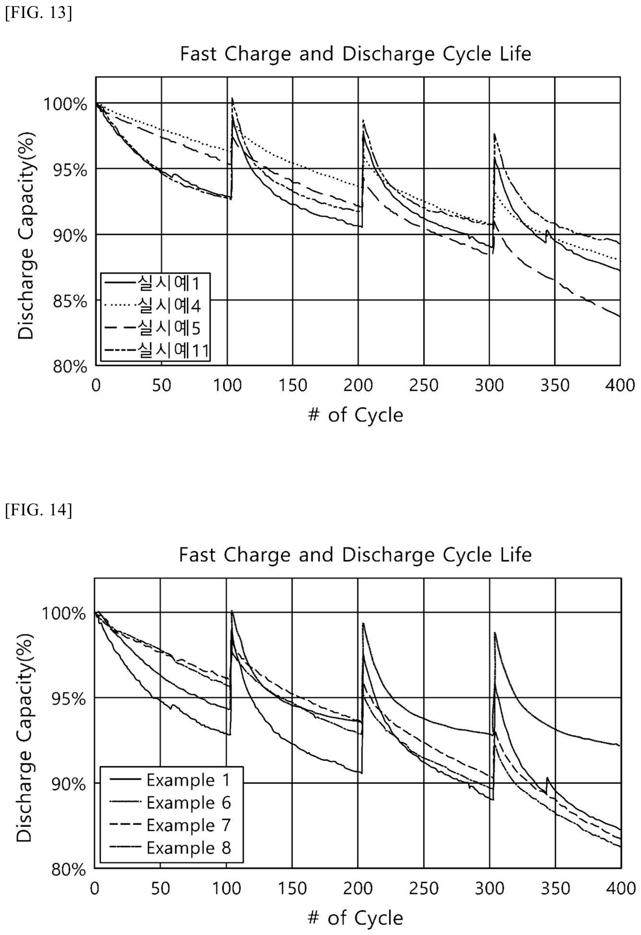

FIGS. 12 to 16 are graphs showing the discharge capacity retention during fast charge and discharge as a function of the number of cycles for the batteries of the examples and comparative examples.

**Experimental Example 6: Evaluation of high-temperature storage properties**

The lithium secondary battery samples of the examples and comparative examples were placed in an oven at 60 °C for 40 weeks, and the time at which venting occurred was observed.

[TABLE 3]

| | High-temperature charge and discharge capacity retention (%) | | Fast charge and discharge capacity retention (%) | Ven in the form of secondary particles ting time during high-temperature storage (weeks) |
|---|---|---|---|---|
| | 800 cycles | 1000 cycles | 400 cycles | |
| Example 1 | 84.9 | 81.8 | 87.3 | 32 |
| Example 2 | 83.7 | 80.8 | 86.9 | Not measured |
| Example 3 | 86.2 | 82.1 | 91.7 | 34 |
| Example 4 | 82.9 | 79.3 | 88.0 | 28 |
| Example 5 | 88.8 | 86.2 | 83.8 | 35 |
| Example 6 | 84.6 | 81.3 | 92.2 | 32 |
| Example 7 | 86.4 | 83.4 | 86.8 | 35 |
| Example 8 | 87.4 | 84.9 | 86.3 | 34 |
| Example 9 | 84.0 | 80.8 | 93.4 | Not measured |

(continued)

| | High-temperature charge and discharge capacity retention (%) | | Fast charge and discharge capacity retention (%) | Ven in the form of secondary particles ting time during high-temperature storage (weeks) |
|---|---|---|---|---|
| | 800 cycles | 1000 cycles | 400 cycles | |
| Example 10 | 83.8 | 80.7 | 93.9 | Not measured |
| Example 11 | 78.8 | - | 89.3 | 25 |
| Comparative Example 1 | 80 (520 cycles) | - | 90.2 | 15 |
| Comparative Example 2 | 83.8 | Venting (943 cycles) | Rapid drop | 20 |
| Comparative Example 3 | 80 (620 cycles) Venting (689 cycles) | - | Rapid drop | 9 |

Referring to Table 3 and FIGS. 7 to 16, the lithium secondary batteries of the examples, which included a cathode including the first cathode active material and an anode including a silicon-based active material, exhibited high capacity retention even after repeated charge and discharge cycles at high temperatures, thereby demonstrating improved high-temperature cycle life properties. In addition, the lithium secondary batteries of the examples maintained high discharge capacities even during repeated fast charge and discharge cycles, indicating improved fast charge and discharge cycle life properties.

The batteries of the examples did not vent for more than 25 weeks during high-temperature storage, confirming an improvement in high-temperature storage properties.

In Example 3, the high-temperature cycle life properties and the fast charge and discharge cycle life properties were further enhanced by using the first cathode active material having an additional coating layer containing lithium tungstate.

In Example 5, the use of a third cathode active material having a larger crystal grain size in combination with the first cathode active material further improved the high-temperature cycle life properties.

The battery of Example 6 showed further improvement in fast charge and discharge cycle life properties by the inclusion of a cathode including first and second cathode active material layers with different binder contents.

The batteries of Examples 7 and 8 exhibited further enhancement in the high-temperature charge and discharge capacity retention by further including a third cathode active material in a cathode including first and second cathode active material layers with different binder contents.

The battery of Example 9 included an anode including first and second anode active material layers with different binder contents, and the battery of Example 10 included an anode including a primer layer, resulting in a particularly significant increase in the fast charge and discharge capacity retention.

On the other hand, since the cathode of the battery of Comparative Example 1 did not include the first cathode active material, the capacity rapidly decreased during repeated charge and discharge in a high-temperature environment, and a vent occurred in the pouch of the battery after about 15 weeks at 60 °C.

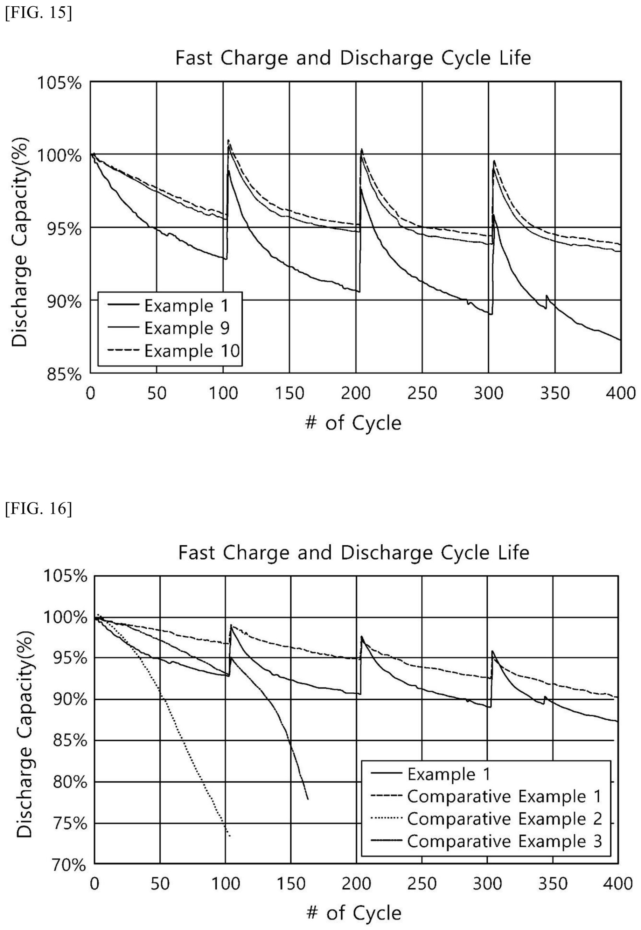

The anode of the battery of Comparative Example 2 did not include a silicon-based active material, and thus the capacity retention during fast charge and discharge rapidly degraded to about 75% after only 100 cycles (see FIG. 16).

The cathode of the battery of Comparative Example 3 did not include the first cathode active material, and the anode did not include the silicon-based active material, so that all of the problems observed in Comparative Example 1 and Comparative Example 2 were also observed.

## Claims

1. A lithium secondary battery comprising:

   a cathode comprising a cathode current collector, and a cathode active material layer disposed on the cathode current collector and including a first cathode active material; and
   an anode comprising an anode current collector, and an anode active material layer disposed on the anode current collector and including a silicon-based active material,
   wherein the first cathode active material comprises lithium-nickel metal oxide particles, and a coating layer disposed on at least a portion of a surface of the lithium-nickel metal oxide particles and including at least one selected from the group consisting of a lithium-phosphorus-containing compound, a lithium-sulfur-containing compound, a lithium-tungsten-containing compound, and a lithium-aluminum-containing compound.

2. The lithium secondary battery according to claim 1, wherein the content of the first cathode active material is 50% by weight to 99% by weight based on the total weight of the cathode active material layer.

3. The lithium secondary battery according to claim 1, wherein the lithium-nickel metal oxide particles have a secondary particle structure in which a plurality of primary particles are agglomerated, and
wherein the coating layer is disposed on at least a portion of the surface of the secondary particles and at least a portion of interfaces between the plurality of primary particles within the secondary particles.

4. The lithium secondary battery according to claim 1, wherein the lithium-nickel metal oxide further comprises at least one of cobalt and manganese, and the content of nickel in the lithium-nickel metal oxide is 48 mol% to 98 mol%, based on the total molar amount of nickel, cobalt and manganese.

5. The lithium secondary battery according to claim 1, wherein the cathode active material layer further comprises a second cathode active material including lithium-nickel metal oxide particles having a secondary particle structure in which a plurality of primary particles are agglomerated and not including the coating layer.

6. The lithium secondary battery according to claim 1, wherein the cathode active material layer further comprises a third cathode active material including lithium-nickel metal oxide particles having a crystal grain size of 250 nm to 1000 nm, as measured by X-ray diffraction (XRD) analysis and calculated using Equation 1 below, and not including the coating layer:

[Equation 1]

$$L = \frac{0.9\lambda}{\beta\cos\theta}$$

(in Equation 1, L denotes the crystal grain size, $\lambda$ denotes the X-ray wavelength, $\beta$ denotes the full width at half maximum of the peak of the (003) plane, and $\theta$ denotes the diffraction angle).

7. The lithium secondary battery according to claim 1, wherein the cathode active material layer comprises a first cathode active material layer and a second cathode active material layer sequentially stacked on the cathode current collector,

wherein the first cathode active material layer and the second cathode active material layer each independently include at least one selected from the group consisting of the first cathode active material, the second cathode active material, and the third cathode active material,
wherein the second cathode active material includes lithium-nickel metal oxide particles having a secondary particle structure in which a plurality of primary particles are agglomerated and not including the coating layer,
wherein the third cathode active material includes lithium-nickel metal oxide particles having a crystal grain size of 250 nm to 1000 nm, as measured by X-ray diffraction (XRD) analysis and calculated using Equation 1 below, and not including the coating layer, and
wherein at least one of the types and contents of the cathode active materials included in the first cathode active material layer and the second cathode active material layer is different:

[Equation 1]

$$L = \frac{0.9\lambda}{\beta\cos\theta}$$

(in Equation 1, L denotes the crystal grain size, $\lambda$ denotes the X-ray wavelength, $\beta$ denotes the full width at half maximum of the peak of the (003) plane, and $\theta$ denotes the diffraction angle).

8. The lithium secondary battery according to claim 5, wherein the content of the second cathode active material is 10% by weight to 50% by weight based on the total weight of the cathode active material layer.

9. The lithium secondary battery according to claim 6, wherein the content of the third cathode active material is 10% by weight to 50% by weight based on the total weight of the cathode active material layer.

10. The lithium secondary battery according to claim 5, wherein a region exists within 10 nm to 30 nm in depth from the surface of the primary particles of the second cathode active material, in which the content of the layered structure is less than the sum of the contents of the cubic structure and the spinel structure.

11. The lithium secondary battery according to claim 1, wherein the cathode active material layer comprises a first cathode active material layer and a second cathode active material layer sequentially stacked on the cathode current collector,

wherein the first cathode active material layer and the second cathode active material layer each include a binder, and
wherein the content of the binder in the total weight of the first cathode active material layer is greater than or equal to the content of the binder in the total weight of the second cathode active material layer.

12. The lithium secondary battery according to claim 1, wherein the silicon-based active material includes at least one selected from the group consisting of silicon, a silicon alloy, silicon oxide, metal-doped silicon oxide, silicon carbide, a silicon-carbon composite (Si-C), and silicon-containing core-shell structured particles.

13. The lithium secondary battery according to claim 1, wherein the content of the silicon-based active material is 5% by weight to 30% by weight based on the total weight of the anode active material layer.

14. The lithium secondary battery according to claim 1, wherein the anode active material further comprises artificial graphite.

15. The lithium secondary battery according to claim 1, wherein the anode active material layer comprises a first anode active material layer and a second anode active material layer sequentially stacked on the anode current collector,

wherein the first anode active material layer and the second anode active material layer each include a binder, and
wherein the content of the binder in the total weight of the first anode active material layer is greater than or equal to the content of the binder in the total weight of the second anode active material layer.

16. The lithium secondary battery according to claim 1, wherein the anode further comprises a primer layer disposed between the anode active material layer and the anode current collector and including a binder.

[FIG. 1]

[FIG. 2]

[FIG. 3A]

[FIG. 3B]

[FIG. 3C]

[FIG. 4A]

[FIG. 4B]

[FIG. 5A]

2.5μm

[FIG. 5B]

## S Kα1

2.5μm

[FIG. 5C]

W Lα1

2.5μm

[FIG. 6A]

Log(Resistance)

[FIG. 6B]

Log(Resistance)

[FIG. 6C]

Log(Resistance)

[FIG. 6D]

Log(Resistance)

[FIG. 7]

High-Temperature Cycle Life Evaluation

[FIG. 8]

High-Temperature Cycle Life Evaluation

[FIG. 9]

**High-Temperature Cycle Life Evaluation**

[FIG. 10]

**High-Temperature Cycle Life Evaluation**

[FIG. 11]

High-Temperature Cycle Life Evaluation

[FIG. 12]

Fast Charge and Discharge Cycle Life

[FIG. 13]

**Fast Charge and Discharge Cycle Life**

[FIG. 14]

**Fast Charge and Discharge Cycle Life**

[FIG. 15]

Fast Charge and Discharge Cycle Life

[FIG. 16]

Fast Charge and Discharge Cycle Life

## INTERNATIONAL SEARCH REPORT

| | International application No. |
|---|---|
| | **PCT/KR2024/006135** |

**A.   CLASSIFICATION OF SUBJECT MATTER**

**H01M 4/36**(2006.01)i; **H01M 4/525**(2010.01)i; **H01M 4/505**(2010.01)i; **H01M 4/131**(2010.01)i; **H01M 4/62**(2006.01)i; **H01M 10/052**(2010.01)i; **H01M 4/38**(2006.01)i; **H01M 4/134**(2010.01)i; **H01M 4/02**(2006.01)i

According to International Patent Classification (IPC) or to both national classification and IPC

**B.   FIELDS SEARCHED**

Minimum documentation searched (classification system followed by classification symbols)

H01M 4/36(2006.01); C01F 7/02(2006.01); H01M 10/052(2010.01); H01M 4/02(2006.01); H01M 4/505(2010.01); H01M 4/525(2010.01); H01M 4/62(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극 활물질(positive electrode active material), 실리콘계 활물질(silicon based active material), 리튬-니켈 금속 산화물 입자(lithium-nickel metal oxide particle), 코팅층(coating layer)

**C.   DOCUMENTS CONSIDERED TO BE RELEVANT**

| Category* | Citation of document, with indication, where appropriate, of the relevant passages | Relevant to claim No. |
|---|---|---|
| X<br><br>Y | KR 10-2022-0063757 A (LG ENERGY SOLUTION, LTD.) 17 May 2022 (2022-05-17)<br>See paragraphs [0132], [0145], [0147], [0189], [0192], [0220], [0235] and [0237]. | 1-4,12-14<br><br>5-11,15-16 |
| Y | KR 10-2022-0126129 A (SAMSUNG SDI CO., LTD.) 15 September 2022 (2022-09-15)<br>See paragraphs [0069], [0074]-[0078], [0097] and [0100]; and figure 2. | 5,7-8,10-11,15-16 |
| Y | KR 10-2293034 B1 (SK INNOVATION CO., LTD.) 24 August 2021 (2021-08-24)<br>See paragraphs [0065]-[0068], [0134], [0136], [0144] and [0149]; and table 2. | 6,9 |
| Y | KR 10-2022-0106897 A (SAMSUNG SDI CO., LTD.) 01 August 2022 (2022-08-01)<br>See claims 1, 11, 13 and 22. | 10 |

[✓] Further documents are listed in the continuation of Box C.    [✓] See patent family annex.

| | |
|---|---|
| \*     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **14 August 2024** | **16 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/006135** |

### C. DOCUMENTS CONSIDERED TO BE RELEVANT

| Category* | Citation of document, with indication, where appropriate, of the relevant passages | Relevant to claim No. |
|---|---|---|
| A | JP 2008-258055 A (TOYOTA MOTOR CORP.) 23 October 2008 (2008-10-23)<br>See entire document. | 1-16 |

Form PCT/ISA/210 (second sheet) (July 2022)

**INTERNATIONAL SEARCH REPORT**
Information on patent family members

International application No.

**PCT/KR2024/006135**

| Patent document cited in search report | | | Publication date (day/month/year) | Patent family member(s) | | | Publication date (day/month/year) |
|---|---|---|---|---|---|---|---|
| KR | 10-2022-0063757 | A | 17 May 2022 | CN | 116057733 | A | 02 May 2023 |
| | | | | EP | 4203100 | A1 | 28 June 2023 |
| | | | | JP | 2023-542196 | A | 05 October 2023 |
| | | | | KR | 10-2667603 | B1 | 22 May 2024 |
| | | | | US | 2023-0348294 | A1 | 02 November 2023 |
| | | | | WO | 2022-103105 | A1 | 19 May 2022 |
| KR | 10-2022-0126129 | A | 15 September 2022 | CN | 115050921 | A | 13 September 2022 |
| | | | | EP | 4089763 | A1 | 16 November 2022 |
| | | | | JP | 2022-137005 | A | 21 September 2022 |
| | | | | JP | 7359883 | B2 | 11 October 2023 |
| | | | | US | 2022-0285680 | A1 | 08 September 2022 |
| KR | 10-2293034 | B1 | 24 August 2021 | CN | 113363439 | A | 07 September 2021 |
| | | | | CN | 113363439 | B | 09 August 2022 |
| | | | | CN | 115275135 | A | 01 November 2022 |
| | | | | EP | 3919445 | A1 | 08 December 2021 |
| | | | | US | 2021-0384505 | A1 | 09 December 2021 |
| KR | 10-2022-0106897 | A | 01 August 2022 | CN | 114784263 | A | 22 July 2022 |
| | | | | EP | 4032861 | A1 | 27 July 2022 |
| | | | | KR | 10-2669978 | B1 | 30 May 2024 |
| | | | | US | 2022-0238872 | A1 | 28 July 2022 |
| JP | 2008-258055 | A | 23 October 2008 | JP | 5261961 | B2 | 14 August 2013 |

Form PCT/ISA/210 (patent family annex) (July 2022)